# EUROPEAN PATENT APPLICATION

(11) **EP 4 460 135 A1**
(43) Date of publication of application: **06.11.2024**
(21) Application number: 21969298.5
(22) Date of filing: 27.12.2021
(51) Int. Cl.: H04W 72/12

(54) **METHOD FOR DATA TRANSMISSION AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: Grassi, Stefano
(86) International application number: PCT/CN2021/141785
(87) International publication number: WO 2023/122912

(57) **Abstract**

Embodiments of the present application provide a method for data transmission and a communication device. The method comprises: determining a first time-frequency domain resource used by first data; and determining, on the basis of the first time-frequency domain resource, at least one symbol length used by the first data and/or at least one coding mode used by the first data. The method provided in the present application not only enables a zero-power-consumption terminal to be applied to a cellular Internet of Things, so as to enrich the types and number of link terminals in a network, thereby truly achieving the Internet of Everything, but also facilitates improving data transmission performance.

## Description

### TECHNICAL FIELD

Embodiments of the present disclosure relate to the field of communications, and more particularly to a method for data transmission, and a communication device.

### BACKGROUND

With increasing application demands in the 5-Generation (5G) mobile communication technology industry, there are more and more application scenarios and types of connectors, and there will be higher requirements on the price and power consumption of communication terminals. The application of passive Internet of Things (IoT) devices with no battery and low cost has become the key technology of cellular Internet of Things, which can enrich types and number of terminals in the network, and then realize the Internet of Everything. The passive IoT devices may be zero-power terminals based on Radio Frequency Identification (RFID), and extended on this basis to be suitable for the cellular IoT.

Therefore, how to apply a zero-power terminal to the cellular IoT is an urgent technical problem to be solved in the field.

### SUMMARY

The embodiments of the present disclosure provide a method for data transmission and a communication device, so that the cellular IoT is compatible with zero-power terminals, which may not only enrich the types and number of terminals linked in the network, so as to realize interconnection of all things, but also facilitates improving the data transmission performance and the integrity of data transmission.

In a first aspect, there is provided a method for data transmission. The method includes following operations.

A first time-frequency domain resource used for first data is determined. At least one code unit length used for the first data and/or at least one coding mode used for the first data are determined based on the first time-frequency domain resource.

In a second aspect, the present disclosure provides a communication device for performing the method in the first aspect or various implementations thereof. In particular, the communication device includes functional modules for executing the method in the first aspect or various implementations thereof.

In one implementation, the communication device may include a processing unit for performing functions related to information processing. For example, the processing unit may be a processor.

In one implementation, the communication device may include a transmitting unit and/or a receiving unit. The transmitting unit is used for performing functions related to transmission, and the receiving unit is used for performing functions related to reception. For example, the transmitting unit may be a transmitter, and the receiving unit may be a receiver. For another example, the communication device is a communication chip, the transmitting unit may be an input circuit or an interface of the communication chip, and the transmitting unit may be an output circuit or an interface of the communication chip.

In some implementations, the communication device is a terminal device or a network device.

In a third aspect, the present disclosure provides a communication device including a processor and a memory. The memory is configured to store a computer program, and the processor is configured to call and execute the computer program stored in the memory to perform the method in the first aspect or implementations thereof.

In one implementation, the number of the processors is one or more, and the number of the memories is one or more.

In one implementation, the memory may be integrated with the processor, or the memory may be arranged separately from the processor.

In one implementation, the communication device further includes a transmitter and a receiver.

In some implementations, the communication device is a terminal device or a network device.

In a fourth aspect, the present disclosure provides a chip for implementing the method in the first aspect or implementations thereof. In particular, the chip includes a processor configured to call and execute a computer program from a memory, to cause a device installed with the chip to perform the method in the first aspect or various implementations thereof.

In a fifth aspect, the present disclosure provides a computer-readable storage medium for storing a computer program. The computer program causes a computer to perform the method in the first aspect or implementations thereof.

In a sixth aspect, the present disclosure provides a computer program product including computer program instructions. The computer program instructions cause a computer to perform the method in the first aspect or implementations thereof.

In a seventh aspect, the present disclosure provides a computer program. The computer program, when run on a computer, causes the computer to perform the method in the first aspect or implementations thereof.

Based on the technical solutions, the communication device determines at least one code unit length used for the first data and/or at least one coding mode used for the first data based on the first time-frequency domain resource, so as to enable the cellular IoT to be compatible with the communication mode of the zero-power terminal, that is, enabling the cellular IoT to be compatible with the zero-power terminals, thereby enriching the types and number of the terminals linked in the network to truly realize the interconnection of all things.

In addition, the communication device determines at least one code unit length used for the first data and/or at least one coding mode used for the first data based on the first time-frequency domain resource for the first data, that is to say, the at least one coding mode and/or the at least one code unit length are associated with the first time-frequency domain resource. That is, when first time-frequency domain resources are different, the at least one code unit length and/or the at least one coding mode determined by the communication device based on the first time-frequency domain resources may be different. In other words, the communication device can adaptively adjust the at least one code unit length and/or the at least one coding mode used for the first data based on the first time-frequency domain resource(s). Because different code unit lengths or different coding modes have different data transmission rates and/or data transmission reliabilities, the communication device adaptively adjusts the at least one code unit length and/or the at least one coding mode used for the first data based on the first time-frequency domain resource(s), which is beneficial to improving the reliability or data transmission rate of data transmission and performing interference deletion at the receiving end, thereby improving the performance and integrity of data transmission.

### BRIEF DESCRIPTION OF THE DRAWINGS

FIG. 1 is a schematic diagram of a communication system provided by an embodiment of the present disclosure.
FIG. 2 is a schematic diagram of a zero-power communication system provided by the present disclosure.
FIG. 3 is a principle diagram of power harvesting provided by an embodiment of the present disclosure.
FIG. 4 is a principle diagram of back scattering communication provided by the present disclosure.
FIG. 5 is a circuit principle diagram of resistance load modulation provided by an embodiment of the present disclosure.
FIG. 6 is a schematic diagram of a subcarrier modulation mode provided by an embodiment of the present disclosure.
FIG. 7 is a schematic diagram of an On-Off Keying (OOK) modulation mode provided by an embodiment of the present disclosure.
FIG. 8 is a schematic flowchart of a method for data transmission provided by an embodiment of the present disclosure.
FIG. 9 and FIG. 10 are schematic diagrams of OOK modulation based on different coding modes provided by embodiments of the present disclosure.
FIG. 11 and FIG. 12 are schematic diagrams of OOK modulation based on different code unit lengths provided by embodiments of the present disclosure.
FIG. 13 is a schematic diagram of a relationship between a first time domain resource set and at least one time domain resource subset provided by an embodiment of the present disclosure.
FIG. 14 to FIG. 18 are examples of at least one code unit length provided by embodiments of the present disclosure.
FIG. 19 is a schematic diagram of a relationship between a first frequency domain resource set and at least one frequency domain resource subset provided by an embodiment of the present disclosure.
FIG. 20 is a schematic diagram of a first time-frequency domain resource set provided by an embodiment of the present disclosure.
FIG. 21 is a schematic diagram of at least one time domain resource subset provided by an embodiment of the present disclosure.
FIG. 22 is a schematic block diagram of a communication device provided by an embodiment of the present disclosure.
FIG. 23 is another schematic block diagram of a communication device provided by an embodiment of the present disclosure.
FIG. 24 is a schematic block diagram of a chip provided by an embodiment of the present disclosure.

### DETAILED DESCRIPTION

The technical solutions of the embodiments of the present disclosure will be described below in conjunction with the drawings in the embodiments of the present disclosure. It is apparent that the described embodiments are not all embodiments but part of embodiments of the disclosure. All other embodiments obtained by those of ordinary skill in the art based on the embodiments in the disclosure without creative work shall fall within the scope of protection of the disclosure.

It should be understood that terms "system" and "network" in the disclosure may usually be interchanged in the disclosure. In the disclosure, the term "and/or" is only an association relationship describing associated objects and represents that three relationships may exist. For example, A and/or B may represent three conditions: independent existence of A, existence of both A and B, and independent existence of B. In addition, character "/" in the disclosure usually represents that previous and next associated objects form an "or" relationship. The term "correspondence" in the present disclosure may indicate a direct or indirect correspondence between the two elements, or may indicate an association between the two elements, or may indicate a relationship of indicating and being indicated, configuring and being configured, etc. The term "indication" in the present disclosure may be a direct indication, an indirect indication, or an indication of an associative relationship. For example, an indication of B by A may indicate that A directly indicates B, for example, B is obtained through A, or that A indirectly indicates B, for example, A indicates C and B is obtained through C, or that there is an association between A and B. The term "preconfigured" in the present disclosure may be achieved by pre-storing corresponding codes, tables or other manners for indicating relevant information in devices (e.g., including a terminal device and a network device). The specific implementation is not limited in the present disclosure. For example, "preconfigured" may refer to those defined in a protocol. It is also to be understood that in embodiments of the disclosure, "protocol" may refer to a standard protocol in the field of communication, which may include, for example, a LTE protocol, NR protocol and relevant protocol applied in the future communication system, which is not limited in the present disclosure

The embodiments of the present disclosure may be applicable to various communication systems, such as: a Global System of Mobile communication (GSM) system, a Code Division Multiple Access (CDMA) system, a Wideband Code Division Multiple Access (WCDMA) system, General Packet Radio Service (GPRS), a Long Term Evolution (LTE) system, an Advanced long term evolution (LTE-A) system, a New Radio (NR) system, a evolution system of a NR system, and a LTE-based access to unlicensed spectrum (LTE-U) system, a NR-based access to unlicensed spectrum (NR-U) system, a Universal Mobile Telecommunication System (UMTS), a Wireless Local Area Network (WLAN), Wireless Fidelity (WiFi), a next generation communication system, a zero-power communication systems, a cellular Internet of Things (IoT), a cellular passive IoT or other communication systems.

The cellular IoT is a development product of the combination of cellular mobile communication network and IoT. The cellular passive IoT is also called passive cellular IoT, which is a combination of a network device and one or more passive terminals. In the cellular passive IoT, a passive terminal may communicate with other passive terminals through the network device, or the passive terminals may communicate in a Device to Device (D2D) communication mode, while the network device only needs to transmit carrier signals, that is, power supply signals, to supply power to the passive terminals.

In general, conventional communication systems support a limited number of connections and are easy to implement. However, with the development of communication technologies, mobile communication systems will not only support conventional communication, but also support, for example, D2D communication, Machine to Machine (M2M) communication, Machine Type Communication (MTC), Vehicle to Vehicle (V2V) communication, etc. The embodiments of the present disclosure may also be applicable to these communication systems.

In an embodiment, the communication system in the embodiments of the present disclosure may be applicable to a Carrier Aggregation (CA) scenario, a Dual Connectivity (DC) scenario, and a Standalone (SA) network distribution scenario.

The applied spectrum is not limited by the embodiments of the present disclosure. For example, the embodiments of the present disclosure may be applicable to a licensed spectrum or an unlicensed spectrum.

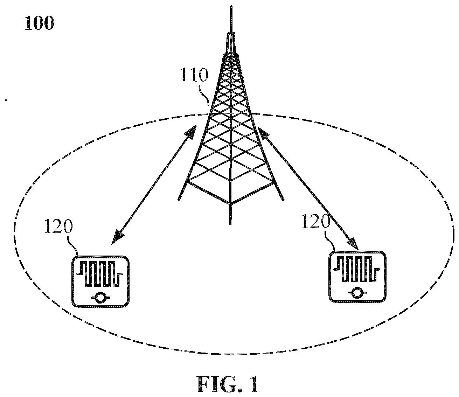

Exemplarily, a communication system 100 applied in the embodiments of the present disclosure is illustrated in FIG. 1. The communication system 100 may include a network device 110, which may be a device that communicates with a terminal device 120 (or referred to as a communication terminal or terminal). The network device 110 may provide communication coverage for a particular geographic area and may communicate with terminal devices located within the coverage area.

FIG. 1 exemplarily illustrates one network device and two terminal devices. In an embodiment, the communication system 100 may include multiple network devices and other numbers of terminal devices may be included within the coverage area of each network device, which is not limited by the embodiments of the present disclosure.

In an embodiment, the communication system 100 may further include other network entities, such as a network controller, a mobility management entity and the like, which are not limited by the embodiments of the present disclosure.

It should be understood that a device having a communication function in a network/system in the embodiments of the present disclosure may be referred to as a communication device. Taking the communication system 100 illustrated in FIG. 1 as an example, the communication device may include a network device 110 and terminal devices 120 that have a communication function, and the network device 110 and the terminal device 120 may be specific devices described above and will not be described here. The communication device may further include other devices in the communication system 100, such as a network controller, a mobility management entity and other network entities, which are not limited in the embodiments of the present disclosure.

The embodiments of the present disclosure describe various embodiments in connection with the terminal device and the network device. The network device may be a device for communicating with a mobile device, the network device may be an Access Point (AP) in a WLAN, a Base Transceiver Station (BTS) in a GSM or in a CDMA, a base station (NodeB, NB) in a WCDMA system, an Evolutional Node B (eNB or eNodeB) in a LTE, or a relay station or an Access Point, or a vehicle-mounted device, a wearable device, a network device (gNB) in an NR network or a network device in a future evolved Public Land Mobile Network (PLMN), etc.

In the embodiments of the present disclosure, the network device provides services for a cell, and the terminal device communicates with the network device through transmission resources (e.g., frequency domain resources, or spectrum resources) used by the cell. The cell may be a cell corresponding to the network device (e.g., base station), and the cell may belong to a macro base station or a base station corresponding to a Small cell. The Small cell may include a Metro cell, a Micro cell, a Pico cell, a Femto cell, etc. These Small cells have the characteristics of small coverage and low transmission power, and are suitable for providing high-speed data transmission services.

In the embodiments of the present disclosure, a terminal device (User Equipment, UE) may also be referred to as a user device, an access terminal, a subscriber unit, a subscriber station, a mobile station, a mobile platform, a remote station, a remote terminal, a mobile device, a user terminal, a terminal, a wireless communication device, a user agent or a user apparatus, etc. The terminal device may be a STAION (ST) in a WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing devices connected to a wireless modem, a vehicle-mounted device, a wearable device, and a next generation communication system, such as a terminal device in an NR network or a terminal device in a future evolved PLMN, or a zero-power device.

Exemplarily but not limitation, in the embodiments of the present disclosure, the terminal device may also be a wearable device. The wearable device may also be referred to as a wearable intelligent device, and is a generic term of wearable devices obtained by performing intelligent design and development on daily wearing products by using the wearable technology, such as glasses, gloves, watches, clothes, and shoes. The wearable device is a portable device directly worn or integrated to clothes or accessory of a user. The wearable device not only is a hardware device but also realizes powerful functions by software support, data interaction, and cloud interaction. Generalized wearable intelligent devices include full-featured, large size and complete or partial functions realized without relying on smart phones, such as smart watches or smart glasses, and includes only a certain application function, which is necessary to be used in conjunction with other devices such as a smart phone, such as various smart bracelets and smart jewelry for monitoring physical signs.

It should be understood that a zero-power device may be understood as a device having a power consumption lower than a preset power consumption. For example, the zero-power device includes a passive terminal and even includes a semi-passive terminal.

Exemplarily, the zero-power device is an RFID tag, which is a technology for realizing contactless automatic transmission and identification of tag information by means of spatial coupling of radio frequency signals. The RFID tag is also called "radio frequency tag" or "electronic tag". The electronic tags may be divided according to different power supply modes into active electronic tags, passive electronic tags and semi-passive electronic tags. The active electronic tag, also known as an active tag, means that working power of the electronic tag is provided by battery, and the battery, memory and antenna together form the active electronic tag. Different from the passive radio frequency activation mode, the active electronic tag transmits information through the set frequency band before battery replacement. The passive electronic tag, also known as a passive tag, does not support a built-in battery. When the passive electronic tag approaches a reader/writer, an antenna of the electronic tag generates an induced current through electromagnetic induction if the tag is in the near field range formed by the radiation of an antenna of the reader/writer, and the induced current drives a chip circuit of the electronic tag. The chip circuit transmits the identification information stored in the tag to the reader/writer through the antenna of the electronic tag. The semi-passive electronic tag, also known as a semi-active electronic tag, inherits the advantages of small size, light weight, low price and long service life of the passive electronic tag. The built-in battery of the semi-passive electronic tag only provides power for a few circuits in the chip when there is no access of the reader/writer, and only when the reader/writer accesses, the built-in battery supplies power to the RFID chip, so as to increase the reading and writing distance of the tag and improve the reliability of communication.

An RFID system is a wireless communication system. The RFID system is composed of two parts: an electronic Tag and a Reader/Writer. The electronic tag includes coupling components and chips. Each electronic tag has a unique electronic code, which is placed on the measured target to mark the target object. The reader/writer may not only read information on the electronic tag, but also write information into the electronic tag, and at the same time, provide the power needed for communication for the electronic tag.

Zero-power communication adopts technologies of power harvesting and back scattering communication. In order to understand the technical solutions of the embodiments of the present disclosure, the related technology of zero-power is explained.

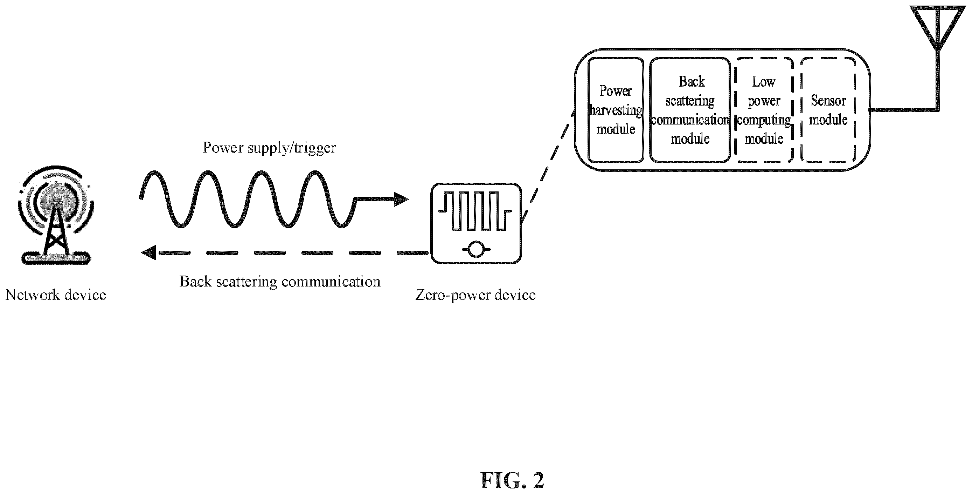

FIG. 2 is a schematic diagram of a zero-power communication system provided by the present disclosure.

As illustrated in FIG. 2, the zero-power communication system includes a network device and a zero-power terminal. The network device is used to transmit wireless power supply signals and downlink communication signals to the zero-power terminal, and receive back scattering signals from the zero-power terminal. A basic zero-power terminal includes a power harvesting module, a back scattering communication module and a low power computing module. In addition, the zero-power terminal may further have a memory or a sensor for storing some basic information (such as, article identification, etc.) or obtaining sensing data, such as ambient temperature and ambient humidity.

Zero-power communication may also be called zero-power terminal-based communication. The key technologies of the zero-power communication mainly include Radio Frequency (RF) power harvesting and back scattering communication.

### 1. RF Power Harvesting

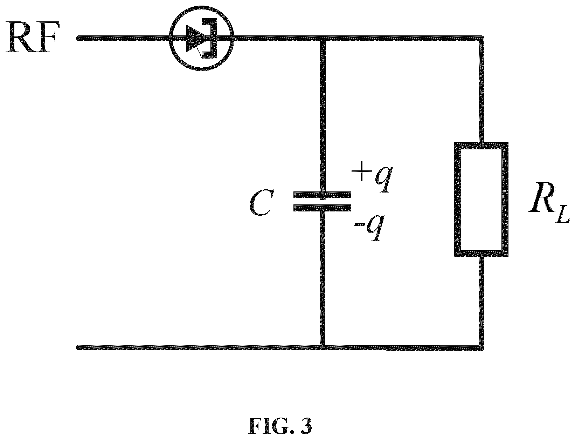

FIG. 3 is a principle diagram of power harvesting provided by an embodiment of the present disclosure.

As illustrated in FIG. 3, the power harvesting module may include a capacitor C and a resistor R_{L}. The RF power harvesting module harvests space electromagnetic wave power based on the principle of electromagnetic induction, and then obtains the power needed to drive the zero-power terminal, such as driving a low-power demodulation and modulation module, sensor and memory reading. Therefore, the zero-power terminal does not need a conventional battery. The principle of electromagnetic induction means that as long as magnetic flux passing through a closed circuit changes, an induced current is generated in the closed circuit. Combined with the present disclosure, the capacitor C and the resistor R_{L} may form a closed circuit. After receiving the RF, the RF power harvesting module may generate an induced current and store the generated induced current in the capacitor C to realize the harvesting of space electromagnetic wave power.

### 2. Back Scattering Communication

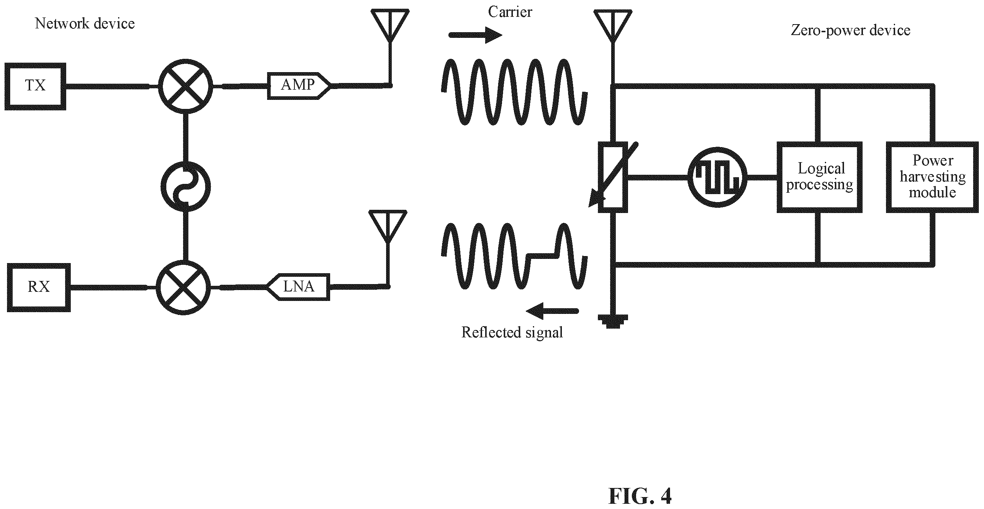

FIG. 4 is a principle diagram of back scattering communication provided by the present disclosure.

As illustrated in FIG. 4, when a network device acts as a transmitting end (TX), the network device transmits a carrier to a zero-power device through an amplifier (AMP). Correspondingly, after receiving the carrier transmitted by the network, the zero-power device drives a logic processing module and a modulation module using the power harvested by the power harvesting module to process and modulate the carrier, and loads the information to be transmitted through the variable resistor and radiates the modulated reflected signal from the antenna. This information transmission process is called back scattering communication. Correspondingly, when the network device acts as the receiving end (RX), the network device may receive the reflected signal transmitted by the zero-power device by a Low Noise Amplifier (LNA). Further, in some possible implementations, each of the AMP and LNA may be connected with a respective voltage display light, and an emergency light may be arranged between the voltage display lights respectively connected to the AMP and LNA.

It should be noted that the back scattering communication principle illustrated in FIG. 4 is explained by a zero-power device and a network device. Actually, any device having a back scattering communication function can realize back scattering communication.

The back scattering communication is inextricably linked to the load modulation function. The load modulation adjusts and controls circuit parameters of the oscillation circuit of the zero-power terminal according to the beat of the data stream, causing the impedance and phase of the zero-power device to be changed accordingly, thereby completing the modulation process. The load modulation technology mainly includes two modes: resistance load modulation and capacitance load modulation.

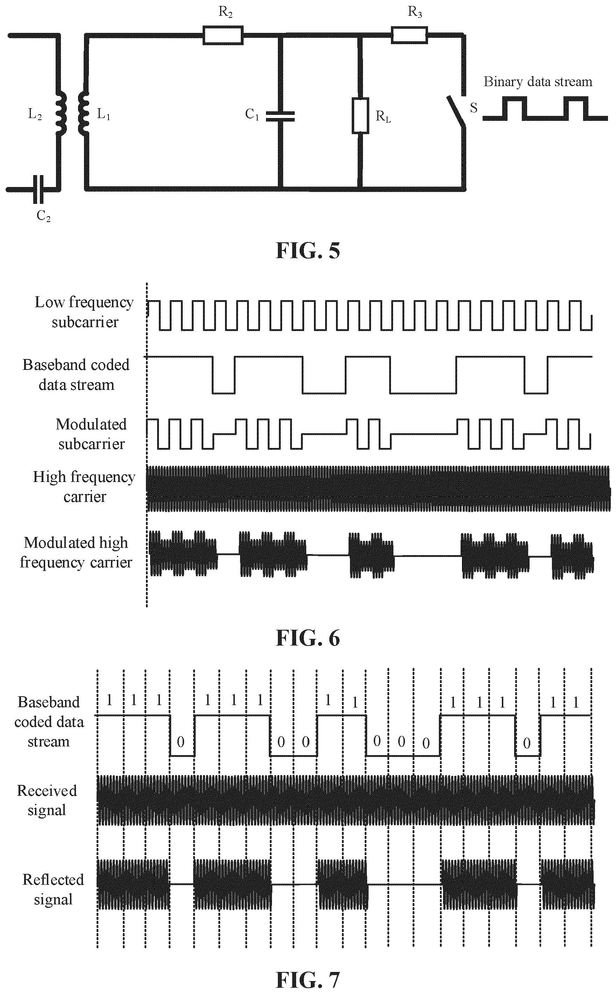

FIG. 5 is a circuit principle diagram of resistance load modulation provided by an embodiment of the present disclosure.

As illustrated in FIG. 5, in resistance load modulation, a resistor R_{L} is connected in parallel with a resistor R₃, and the resistor R_{L} may be called the load modulation resistor. The resistor R_{L} is turned on or off based on control of the binary data stream, and the on-off of the resistor R_{L} will lead to the change of the circuit voltage. Further, the resistor R_{L} may be connected in parallel with an inductor L₁ through a resistor R₂, and the inductor L₁ is used to form a resonant circuit with an inductor L₂. Based on this, the on-off of the load modulation resistor may lead to the change of the circuit voltage, which will lead to the change of the resonant frequency of the resonant circuit, and finally realize Amplitude Keying Modulation (ASK). That is, the signal modulation and transmission are realized by adjusting the amplitude of the back scattering signal of the zero-power terminal. Further, the inductor L₂ may also be connected to a capacitor C₂. The capacitor C₂ may be used to convert a change in the resonant frequency of the resonant circuit into a signal for transmission by the antenna. Similarly, in the capacitance load modulation, the change in the resonant frequency of the resonant circuit is realized by turning on and off the capacitor C₁, and the Frequency Keying Modulation (FSK) is realized. That is, the signal modulation and transmission are realized by adjusting the operating frequency of the back scattering signal of the zero-power terminal.

Because the zero-power terminal modulates incoming signals by means of load modulation to implement the back scattering communication process, the zero-power terminal has following significant advantages.
1. The terminal device does not actively transmit signals, and realizes back scattering communication by modulating incoming signals.
2. The terminal device does not rely on a conventional active power amplifier transmitter, and uses a low power computing unit, which greatly reduces the complexity of hardware.
3. Battery-free communication is realized by combining power harvesting.

It should be understood that the terminal device may be a zero-power device (such as a passive terminal, or even a semi-passive terminal), or even the terminal device may be a non-zero power device, such as an ordinary terminal, but the ordinary terminal may perform back scattering communication in some cases.

In a specific implementation, the data transmitted by the terminal device may use different forms of codes to represent binary "1" and "0". A Radio frequency identification system generally uses one of the following coding modes: reverse non-return-to-zero (NRZ) coding, Manchester coding, Unipolar return-to-zero (RZ) coding, differential biphase (DBP) coding, Miller coding and differential coding. Generally speaking, 0 and 1 are represented by different pulse signals.

Exemplarily, zero-power terminals may be divided into the following types based on the power source and usage mode of the zero-power terminals.

### 1. Passive zero-power terminal

The zero-power terminal does not need a built-in battery. When the zero-power terminal approaches a network device (such as a reader/writer of the RFID system), the zero-power terminal is in the near-field range formed by the radiation of the antenna of the network device. Therefore, an antenna of the zero-power terminal generates an induced current through electromagnetic induction, and the induced current drives the low power chip circuit of the zero-power terminal. Demodulation of the forward link signal and modulation of the backward link signal are realized. For the back scattering link, the zero-power terminal uses the back scattering implementation for signal transmission.

It can be seen that the passive zero-power terminal does not need the built-in battery to drive either the forward link or the backward link, so it is a true zero-power terminal. The passive zero-power terminal does not need a battery, and the RF circuit and the baseband circuit of the passive zero-power terminal are very simple. For example, an LNA, a Power Amplifier (PA), a crystal oscillator, an Analog to Digital Converter (ADC) and the like are not required by the passive zero-power terminal, and thus the passive zero-power terminal has many advantages, such as small size, light weight, very low price and long service life.

### 2. Semi-passive zero-power terminal

The semi-passive zero-power terminal is not installed with a conventional battery, but an RF power harvesting module may be used to harvest radio wave power and store the harvested power in a power storage unit (such as, a capacitor). After the power storage unit obtains the power, the low power chip circuit of the zero-power terminal can be driven. Demodulation of the forward link signal and modulation of the backward link signal are realized. For the back scattering link, the zero-power terminal uses the back scattering implementation for signal transmission.

It can be seen that the semi-passive zero-power terminal does not need a built-in battery to drive either the forward link or the backward link. Although the power stored by capacitors is used during operating, the power comes from the radio power harvested by the power harvesting module, so it is also a true zero-power terminal. The semi-passive zero-power terminal inherits many advantages of the passive zero-power terminal, so it has many advantages such as small size, light weight, very low price and long service life.

### 3. Active zero-power terminal

In some scenarios, the zero-power terminal used may also be an active zero-power terminal, which may have a built-in battery. The battery is used to drive a low power chip circuit of the zero-power terminal, to implement demodulation of the forward link signal, modulation of the backward link signal and the like. However, for the back scattering link, the zero-power terminal uses the back scattering implementation for signal transmission. Therefore, the zero-power of such terminal is mainly reflected in the fact that the signal transmission on the backward link does not need the power of the terminal itself, but uses back scattering. That is to say, the active zero-power terminal supplies power to the RFID chip through the built-in battery, so as to increase the reading and writing distance of the zero-power terminal and improve the reliability of communication. Therefore, the active zero-power terminal can be applied in some scenarios with relatively high requirements on communication distance and reading delay.

Exemplarily, the zero-power terminal may perform power harvesting based on the power supply signal.

In an embodiment, from the perspective of the carrier for the power supply signal, the power supply signal may be a base station, a smart phone, an intelligent gateway, a charging station, a micro base station, etc.

In an embodiment, from the perspective of the frequency band, the power supply signal may be a low frequency signal, an intermediate frequency signal, a high frequency signal, etc.

In an embodiment, from the perspective of the waveform, the power supply signal may be a sine wave, a square wave, a triangular wave, a pulse, a rectangular wave, etc.

In an embodiment, the power supply signal may be a continuous wave or a noncontinuous wave (i.e., a certain time interruption is allowed).

In an embodiment, the power supply signal may be a signal specified in the 3GPP standard. For example, the power supply signal may be a Sounding Reference Signal (SRS), a Physical Uplink Shared Channel (PUSCH), a Physical Random Access Channel (PRACH), a Physical Uplink Control Channel (PUCCH), a Physical Downlink Control Channel (PDCCH), a Physical Downlink Shared Channel (PDSCH), a Physical Broadcast Channel (PBCH), etc.

It should be noted that since the carrier signal transmitted by the network device may also be used to provide power to the zero-power device, the carrier signal may also be called a power supply signal.

Exemplarily, the zero-power terminal may perform back scattering communication based on the received trigger signal. In an embodiment, the trigger signal may be used to schedule or trigger the zero-power terminal to perform the back scattering communication. In an embodiment, the trigger signal carries scheduling information of the network device, or the trigger signal is scheduling signaling or a scheduling signal transmitted by the network device.

In an embodiment, from the perspective of the carrier for the power supply signal, the trigger signal may be a base station, a smart phone, an intelligent gateway, etc.

In an embodiment, from the perspective of the frequency band, the trigger signal may be a low frequency signal, an intermediate frequency signal, a high frequency signal, etc.

In an embodiment, from the perspective of the waveform, the trigger signal may be a sine wave, a square wave, a triangular wave, a pulse, a rectangular wave, etc.

In an embodiment, the trigger signal may be a continuous wave or a noncontinuous wave (i.e., a certain time interruption is allowed).

In an embodiment, the trigger signal may be a signal specified in the 3GPP standard, such as, an SRS, a PUSCH, a PRACH, a PUCCH, a PDCCH, a PDSCH, a PBCH and so on. The trigger signal may also be a new signal.

It should be noted that the power supply signal and the trigger signal may be one signal or two independent signals, which are not specifically limited in the present disclosure.

For example, in the cellular network, because a zero-power device is not powered by a battery, it is necessary to provide a power supply signal(s) through a network device for supplying power to the zero-power device to perform the corresponding communication process. The signal for power supply (i.e. the power supply signal) and the signal for information transmission (i.e. the trigger signal) may be two signals or one signal. For another example, in the RFID technology, the power supply signal and the trigger signal may be one signal, and in the cellular passive IoT technology, the power supply signal and the trigger signal may be two independent signals. These two signals may not be transmitted in the same band. For example, the network device continuously or intermittently transmits power supply signals in a band, and the zero-power device harvests power. After the zero-power device obtains power, the corresponding communication process, such as measurement, channel/signal reception, channel/signal transmission and so on, can be carried out.

When transmitting the signal, the zero-power device may transmit the signal on preset resources, for example, different user IDs or different user types adopt different resources, and the zero-power device may also transmit the signal based on scheduling of the network device, that is, receive the trigger signal and transmit the signal based on the scheduling of the trigger signal.

Because the zero-power device is unable to generate high-frequency signals, the subcarrier modulation mode or the OOK modulation mode is used in the backward link to modulate the coded baseband coded data stream. FIG. 6 is a schematic diagram of a subcarrier modulation mode provided by an embodiment of the present disclosure. As illustrated in FIG. 6, for the subcarrier modulation mode, the zero-power device first generates a low-frequency subcarrier, and then modulates the coded baseband coded data stream on the low-frequency subcarrier to obtain a modulated subcarrier. After that, the modulated subcarrier is modulated on a high frequency carrier by means of load modulation to obtain a modulated high-frequency subcarrier. FIG. 7 is a schematic diagram of an OOK modulation mode provided by an embodiment of the present disclosure. As illustrated in FIG. 7, for the OOK modulation mode, the zero-power device modulates the coded baseband coded data stream on the signal received by the zero-power device to obtain a reflected signal, and transmits the reflected signal to the network device. The signal received by the zero-power device may be a high-frequency signal or a specific carrier signal.

With the increasing application demand in the 5G industry, there are more and more types and application scenarios of connectors, and there will be higher requirements on the price and power consumption of communication terminals. The application of battery-free and low-cost passive IoT devices has become the key technology of cellular IoT, which can enrich the types and number of terminals in the network, and then truly realize the Internet of Everything. The passive IoT devices may be based on existing zero-power devices, such as RFID technology, and extended on this basis to be suitable for cellular IoT.

In actual network deployment, a technical bottleneck for the passive zero-power communication technology is the limited coverage distance of the forward link, which is mainly due to the fact that the communication distance of the forward link is limited by the signal strength of wireless signals reaching the zero-power terminal. Based on the above implementation technology, the zero-power terminal generally needs to consume 10 microwatts (uw) to drive a low power circuit. This means that the power of the signal reaching the zero-power terminal needs to be at least -20 dBm. Limited by the requirements of radio supervision, the transmission power of the network device is generally not too large. For example, in an Industrial Scientific Medical (ISM) band where RFID works, the maximum transmission power is 30 dBm. Therefore, considering the radio propagation loss in space, the transmission distance of the passive zero-power terminal is generally in the range of 10 m to tens of meters.

The semi-passive zero-power terminal has the potential to significantly expand the communication distance since the semi-passive zero-power terminal can use RF power harvesting module to harvest radio waves, so that the semi-passive zero-power terminal continuously obtains radio power and store the power in the power storage unit. After obtaining enough power, the power storage unit may drive the low-power circuit to operate for signal demodulation in the forward link and signal modulation in the backward link. Therefore, in this case, the semi-passive zero-power terminal is equivalent to an active terminal, and downlink coverage of the semi-passive zero-power terminal depends on the receiver sensitivity for the downlink signal (usually far below the RF power harvesting threshold). Based on the current technology, the power harvesting module may harvest power and input electric power to the power storage unit when the received radio signal strength is not lower than -30 dBm. Therefore, the coverage of the forward link of the semi-passive zero-power terminal depends on the RF power harvesting threshold (e.g., -30 dBm). Compared with the passive zero-power terminal, the received radio signal strength is relaxed from -20 dBm to -30 dBm, so a link budget gain of 10 dB is obtained, and therefore the downlink coverage can be improved by more than 3 times. However, while improving the coverage of the forward link, semi-passive zero-power terminals also face the problem of decreasing charging efficiency. As the received signal strength decreases, the power that can be harvested and stored by the power harvesting module is greatly reduced. For example, when the received signal strength is -30 dBm, that is, 1 microwatt, the power that can be harvested and stored is far smaller than 1 microwatt (the power harvesting efficiency is greatly reduced).

On the other hand, as mentioned above, the low power circuit of the zero-power terminal may need to consume an average power of 10 microwatts (µw).

It can be seen from the two aspects that because the terminal device needs to harvest power, when the terminal device is far away from the network device, it is very slow to obtain and store power through power harvesting. In addition, if a terminal device close to the network device performs back scattering communication at a higher rate, the data transmission performance may be guaranteed, but if a terminal device far away from the network device also performs back scattering communication at the higher rate, it may result in an excessive block error rate (BLER), which increases the number of transmissions of Hybrid Automatic Repeat Request (HARQ), and eventually reduce the performance of data transmission.

Based on this, the embodiments of the present disclosure provide a method for data transmission and a communication device, which can not only apply zero-power terminals to the cellular IoT to enrich the types and number of terminals linked in the network, thereby truly realizing interconnection of all things, but also facilitate improving the data transmission performance.

It should be noted that the solution provided by the present disclosure is not only applicable to zero-power scenarios, but also applicable to non-zero power scenarios, that is, applicable to the data transmission process between a terminal device and a network device, such as the process of transmitting data by the terminal device or the process of receiving data by the network device. In addition, the solution provided by the present disclosure is also applicable to the initial access procedure, such as the process of transmitting data by the terminal device or the process of receiving data by the network device, which is not specifically limited by the present disclosure.

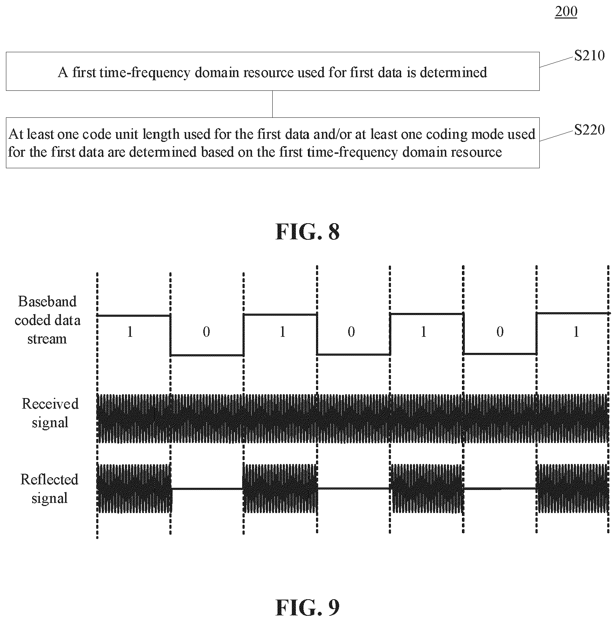

FIG. 8 is a schematic flowchart of a method 200 for data transmission provided by an embodiment of the present disclosure. The method 200 may be performed by a communication device. The communication device may be a terminal device or a network device. For example, the communication device may be a terminal device 120 or a network device 110 illustrated in FIG. 1. For another example, the communication device may be a zero-power terminal or a network device.

As illustrated in FIG. 8, the method may include the following operations.

At S210, a first time-frequency domain resource used for first data is determined.

At S220, at least one code unit length used for the first data and/or at least one coding mode used for the first data are determined based on the first time-frequency domain resource.

In the embodiment, the communication device determines at least one code unit length used for the first data and/or at least one coding mode used for the first data based on the first time-frequency domain resource for the first data, so as to enable the cellular IoT to be compatible with the communication mode of the zero-power terminal, that is, enabling the cellular IoT to be compatible with the zero-power terminal, thereby enriching the type and number of the terminal linked in the network to truly realize the interconnection of all things.

In addition, the communication device determines at least one code unit length used for the first data and/or at least one coding mode used for the first data based on the first time-frequency domain resource for the first data, that is to say, the at least one coding mode and/or the at least one code unit length are associated with the first time-frequency domain resource. That is, when first time-frequency domain resources are different time-frequency domain resources, the at least one code unit length and/or the at least one coding mode determined by the communication device based on the first time-frequency domain resources may be different. In other words, the communication device can adaptively adjust the at least one code unit length and/or the at least one coding mode used for the first data based on the first time-frequency domain resource(s). Because different code unit lengths or different coding modes have different data transmission rates and/or data transmission reliabilities, the communication device adaptively adjusts the at least one code unit length and/or the at least one coding mode used for the first data based on the first time-frequency domain resource(s), which is beneficial to improving the reliability or data transmission rate of data transmission and performing interference deletion at the receiving end, thereby improving the performance and integrity of data transmission.

For example, when the channel condition is poor or the first time-frequency domain resource is large, the at least one code unit length is adaptively adjusted to a larger code unit length and/or the at least one coding mode is adaptively adjusted to a coding mode with a higher reliability through the first time-frequency domain resource, so as to improve the reliability of data transmission. When the channel condition is good or the first time-frequency domain resource is small, the at least one code unit length is adaptively adjusted to a smaller code unit length and/or the at least one coding mode is adaptively adjusted to a coding mode with a higher transmission rate through the first time-frequency domain resource, so as to improve the data transmission rate. That is, when the communication device adaptively adjusts the at least one code unit length and/or the at least one coding mode based on the first time-frequency domain resource, the reliability of data transmission or the data transmission rate can be adaptively improved, and the interference deletion processing can be facilitated at the receiving end, thereby improving the data transmission performance and integrity of the data transmission.

For another example, when the channel condition is poor or the first time-frequency domain resource is large, the at least one code unit length is adaptively adjusted to a smaller code unit length and/or the at least one coding mode is adaptively adjusted to a coding mode with a higher transmission rate through the first time-frequency domain resource, so as to further improve the data transmission rate. When the channel condition is good or the first time-frequency domain resource is small, the at least one code unit length is adaptively adjusted to a larger code unit length and/or the at least one coding mode is adaptively adjusted to a coding mode with a higher reliability through the first time-frequency domain resource, so as to further improve the reliability of data transmission. That is, when the communication device adaptively adjusts the at least one code unit length and/or the at least one coding mode based on the first time-frequency domain resource, the reliability of data transmission or the data transmission rate can be adaptively improved, and the interference deletion processing can be facilitated at the receiving end, thereby improving the performance and integrity of the data transmission.

In addition, when the coding mode and/or the code unit length are associated with the time-frequency domain resource, multiple coding modes and/or multiple code unit lengths may be associated with a same time domain resource and/or frequency domain resource. That is to say, multiple terminal devices may use the same time domain resource and/or frequency domain resource and different coding modes and/or code unit lengths for data transmission, thereby not only reducing the interference between the multiple terminal devices, but also improving the multiplexing degree of the time domain resources and/or frequency domain resources by the terminal devices, and further increasing the number of terminal devices accessed in a unit time resource and/or a unit frequency domain resource, so as to improve the system performance. Particularly, thousands of zero-power terminals may be supported to access to a communication network and implement wireless communication in the communication network.

It should be noted that the communication device can support multiple code unit lengths and/or multiple coding modes. The multiple code unit lengths include the at least one code unit length, and the multiple coding modes include the at least one coding mode.

In addition, the at least one coding mode and at least one code unit length are not specifically limited in the present disclosure.

As an example, the at least one coding mode includes, but is not limited to, several common coding algorithms described above, such as NRZ coding, unipolar return-to-zero coding, Manchester coding, Miller coding, DBP coding, differential coding, Pulse Interval Encoding (PIE) and so on.

As an example, each of the at least one code unit length may be a length of time corresponding to one code unit. Alternatively, the length corresponding to one code unit may refer to a length of the code unit used to carry one bit of information. For example, taking FIG. 6 as an example, the length of one code unit may refer to a length of time of one bit of information on the baseband coded data stream, a length of time corresponding to one bit of information on the modulated subcarrier, or a length of time corresponding to one bit of information on the modulated high frequency carrier. For another example, taking FIG. 7 as an example, the length of one code unit may refer to a length of time of one bit of information on the baseband coded data stream, or a length of time corresponding to one bit of information on the reflected signal. For another example, for NRZ coding, unipolar return-to-zero coding, Manchester coding, Miller coding, DBP coding, differential coding, etc, one code unit may be used to carry one bit of information. For another example, for the PIE mode, the number of code units used for different bit information is different, that is, there is a situation that multiple code units carry one bit of information. In other words, when PIE is used, the rate of back scattering signals is low. In other alternative embodiments, the code unit may also be referred to as a chip, a symbol, or a frame. Alternatively, the code unit length may also be referred to as a code unit time length or the like, which is not specifically limited herein.

In addition, the implementation of the first time-frequency domain resource is not limited in the present disclosure.

Exemplarily, the first time-frequency domain resource may be pre-configured, or the first time-frequency domain resource may be scheduled by a network device.

Exemplarily, the first time-frequency domain resource may include a first time domain resource and a first frequency domain resource. For example, the units of the first time domain resource include, but are not limited to, symbols, slots, subframes, frames, milliseconds, seconds. Alternatively, the first time domain resource may include at least one time domain resource unit, and a time domain resource unit includes, but is not limited to, a symbol, slot, subframe, frame, millisecond, second, etc. For example, the units of the first frequency domain resource include, but are not limited to, Bandwidth Part (BWP), Hz, kHz, MHz, etc. Alternatively, the first frequency domain resource may include at least one frequency domain resource unit, and a frequency domain resource unit includes, but is not limited to, BWP, Hz, kHz, MHz, etc.

In addition, the first data is not specifically limited in the present disclosure.

Exemplarily, the first data may be data to be transmitted by the terminal device, and the first data may be data before encoding. The first data may also be referred to as a first data packet, e.g., the first data may be a Media Access Control (MAC) Control Element (CE) Protocol Data Unit (PDU).

In some embodiments, the operation at S220 may include following operations.

A first length of the first time-frequency domain resource in time domain is determined.

A first length group to which the first length belongs is determined.

At least one code unit length corresponding to the first length group is determined as the at least one code unit length based on a first mapping relationship, and/or at least one coding mode corresponding to the first length group is determined as the at least one coding mode based on the first mapping relationship. The first mapping relationship includes a correspondence between each length group in at least one length group and at least one code unit length and/or at least one coding mode corresponding to the length group, and the at least one length group includes the first length group.

In the embodiment, the at least one code unit length corresponding to the first length group is determined as the at least one code unit length used for the first data, and/or the at least one coding mode corresponding to the first length group is determined as the at least one coding mode used for the first data. That is, the at least one code unit length and/or the at least one coding mode are associated with the first length, that is, the communication device may adaptively adjust the at least one code unit length and/or the at least one coding mode based on the first length, and further adaptively improve the reliability of data transmission or the data transmission rate based on the first length, which is beneficial to improving the data transmission performance.

For example, when the channel condition is poor or the first length is large, the at least one code unit length is adaptively adjusted to a larger code unit length and/or the at least one coding mode is adaptively adjusted to a coding mode with a higher reliability through the first length, so as to improve the reliability of data transmission. When the channel condition is good or the first length is small, the at least one code unit length is adaptively adjusted to a smaller code unit length and/or the at least one coding mode is adaptively adjusted to a coding mode with a higher transmission rate through the first length, so as to improve the data transmission rate. That is, when the communication device adaptively adjusts the at least one code unit length and/or the at least one coding mode based on the first length, the reliability of data transmission or the data transmission rate can be adaptively improved, and the interference deletion processing can be facilitated at the receiving end, thereby improving the data transmission performance and the integrity of the data transmission.

For another example, when the channel condition is poor or the first length is large, the at least one code unit length is adaptively adjusted to a smaller code unit length and/or the at least one coding mode is adaptively adjusted to a coding mode with a higher transmission rate through the first length, so as to further improve the data transmission rate. When the channel condition is good or the first length is small, the at least one code unit length is adaptively adjusted to a larger code unit length and/or the at least one coding mode is adaptively adjusted to a coding mode with a higher reliability through the first length, so as to further improve the reliability of data transmission. That is, when the communication device adaptively adjusts the at least one code unit length and/or the at least one coding mode based on the first length, the reliability of data transmission or the data transmission rate can be adaptively improved, and the interference deletion processing can be facilitated at the receiving end, thereby improving the data transmission performance and the integrity of the data transmission.

In addition, when the coding mode and/or the code unit length are associated with the length of the time-frequency domain resource in time domain, multiple coding modes and/or multiple code unit lengths may be associated with the time domain resource(s) of a same length or even a same position. That is to say, multiple terminal devices may use the same time domain resource and adopt different coding modes and/or code unit lengths for data transmission, thereby not only reducing the interference between the multiple terminal devices, but also improving the multiplexing degree of the time domain resources by the terminal devices, and further increasing the number of terminal devices accessed in a unit time resource, so as to improve the system performance. Particularly, thousands of zero-power terminals may be supported to access to a communication network and implement wireless communication in the communication network.

As an example, the terminal device may determine the first length according to a pre-configured first time-frequency domain resource or a first time-frequency domain resource scheduled by the network device, and determine at least one code unit length corresponding to the first length group including the first length as the at least one code unit length based on the first mapping relationship, and/or determine at least one coding mode corresponding to the first length group as the at least one coding mode based on the first mapping relationship. Since the first time-frequency domain resource is scheduled by the network device or pre-configured, the understanding of the network device for the first time-frequency domain resource can be consistent with that of the terminal device. Based on this, the network device may also determine at least one code unit length corresponding to the first length group including the first length as the at least one code unit length based on the first mapping relationship, and/or determine at least one coding mode corresponding to the first length group as the at least one coding mode based on the first mapping relationship.

In some embodiments, the at least one length group includes a group obtained by dividing time domain resources of a preset length.

Exemplarily, the at least one length group includes a group obtained by dividing time-frequency resources of the preset length based on multiple thresholds.

Exemplarily, the at least one length group includes k length groups obtained based on k thresholds, and each of the k length groups corresponds to one coding mode and/or code unit length. For example, assuming that Xₖ represents the k-th threshold, the value range of the time domain resource corresponding to the first length group in the k length groups is [1, X₁), the value range of the time domain resource corresponding to the second length group in the k length groups is [X₁, X₂], and so on, and the value range of the time domain resource corresponding to the k-th length group in the k length groups is [Xₖ₋₁, Xₖ].

In some embodiments, the at least one length group includes a group obtained by dividing at least one time domain resource length.

Exemplarily, taking the at least one time domain resource length including X₁, X₂, X₃, X₄ and X₅ in ascending order (from small to large) as an example, in this embodiment, the communication device may obtain two length groups by dividing X₁, X₂, X₃, X₄ and X₅, time domain resource lengths in the first length group of the two length groups include X₁, X₂ and X₃, and time domain resource lengths in the second length group of the two length groups include X₄ and X₅.

In other alternative embodiments, the at least one time domain resource length may be another number of time domain resource lengths. Alternatively, three length groups or four length groups may be obtained by dividing X₁, X₂, X₃, X₄ and X₅, etc., which is not specifically limited in the present disclosure.

In some embodiments, each of the at least one time domain resource length is an integral multiple of a time unit. When the first length is not an integral multiple of the time unit, the first length is rounded up or down to obtain a second length. The group to which the second length belongs (i.e., the group including the second length) is determined as the first length group.

As an example, when the at least one time domain resource length does not include the first length, a time domain resource length closest to the first length is determined from the at least one time domain resource length, and a length group including the time domain resource length closest to the first length is determined as the first length group. For example, a length group to which a time domain resource length greater than the first length and closest to the first length belongs may be determined as the first length group. For another example, a length group to which a time domain resource length less than the first length and closest to the first length belongs may be determined as the first length group.

For example, taking the at least one time domain resource length including X₁, X₂, X₃, X₄ and X₅ in ascending order as an example, in this embodiment, the communication device may obtain two length groups by dividing X₁, X₂, X₃, X₄ and X₅, the time domain resource lengths in the first length group of the two length groups include X₁, X₂ and X₃, and the time domain resource lengths in the second length group of the two length groups include X₄ and X₅. If the first length Xₜ is a value between X₃ and X₄, the second length group including X₄ (which is greater than Xₜ and closest to Xₜ) may be determined as the first length group, or the first length group including X₃ (which is less than Xₜ and closest to Xₜ) may be determined as the first length group.

In some embodiments, different length groups in the at least one length group correspond to different coding modes and/or different code unit lengths, or part of the at least one length group correspond to a same coding mode and/or a same code unit length.

Exemplarily, the length groups and the coding modes in the first mapping relationship may be in one-to-one correspondence, and may also be in one-to-many or many-to-one correspondence.

Exemplarily, the length groups and the code unit lengths in the first mapping relationship may be in one-to-one correspondence, and may also be in one-to-many or many-to-one correspondence.

In some embodiments, the first mapping relationship is determined by the communication device from multiple mapping relationships.

Exemplarily, the multiple mapping relationships may be pre-configured, configured by the network device, or determined by the terminal device.

Exemplarily, the multiple mapping relationships may be determined by the terminal device, and further, the terminal device may transmit information indicating the multiple mapping relationships to the network device.

It should be noted that each of the multiple mapping relationships may be used to define the code unit length and/or the coding mode corresponding to each length group in the at least one length group, but in different mapping relationships, the correspondence between the length group and the code unit length is different, and/or the correspondence between the length group and the coding mode is different. Certainly, in other alternative embodiments, the mapping relationship may also be referred to as a mapping pattern.

In some embodiments, the first mapping relationship is determined from multiple mapping relationships based on relevant information of a terminal device, and/or the first mapping relationship is determined from the multiple mapping relationships based on information indicated by a network device.

Exemplarily, the first mapping relationship is determined by a terminal device or a network device from the multiple mapping relationships based on relevant information of the terminal device. Further, the terminal device may report the relevant information of the terminal device to the network device.

Exemplarily, the relevant information of the terminal device includes, but is not limited to, an identity of the terminal device and/or a cell identity for the terminal device.

Exemplarily, the first mapping relationship may be obtained through processing the identity of the terminal device according to a preset rule by the communication device. For example, the first mapping relationship may be obtained through calculating the relevant information of the terminal device according to a preset rule in a preset calculation mode by the communication device. For example, the first mapping relationship may be obtained through performing modulo operation on the relevant information or part of the relevant information of the terminal device based on the number of the multiple mapping relationships by the communication device.

Exemplarily, the first mapping relationship is a mapping relationship indicated by a network device.

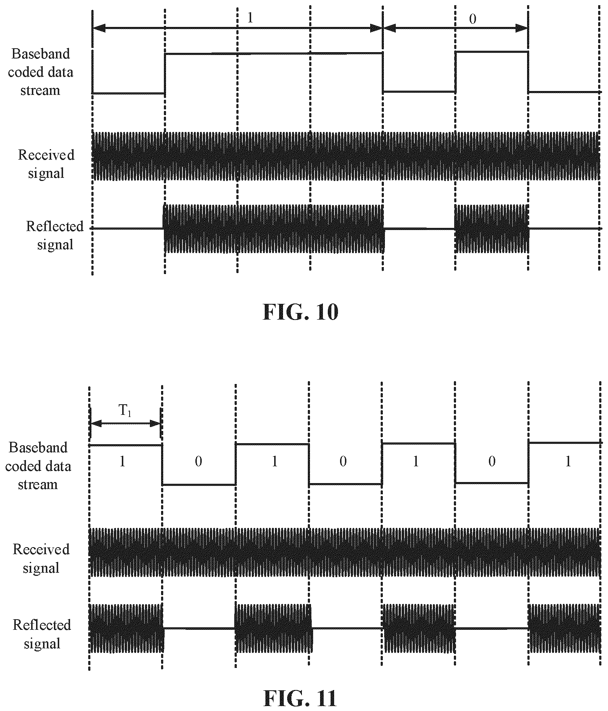

FIG. 9 and FIG. 10 are schematic diagrams of OOK modulation based on different coding modes provided by embodiments of the present disclosure.

Exemplarily, the coding mode 1 illustrated in FIG. 9 is a coding mode determined by the communication device based on L₁, and the coding mode 2 illustrated in FIG. 10 is a coding mode determined by the communication device based on L₂.

In other words, when the first length is L₁, the communication device may adaptively adjust the at least one coding mode to the coding mode 1 based on the first length, and when the first length is L₂, the communication device may adaptively adjust the at least one coding mode to the coding mode 2 based on the first length. Furthermore, in the examples illustrated in FIG. 9 and FIG. 10, when the same code unit length is used, since the coding mode 1 has a higher transmission rate, thus if L₁ < L₂, i.e., the first length is small, the at least one coding mode may be adaptively adjusted to a coding mode with a higher transmission rate based on the first length; when the first length is large, the at least one coding mode may be adaptively adjusted to a coding mode with a higher reliability based on the first length. Therefore, the reliability of data transmission or the data transmission rate can be adaptively improved, and the interference deletion processing can be facilitated at the receiving end, thereby improving the data transmission performance and the integrity of the data transmission.

It should be understood that FIG. 9 and FIG. 10 are examples of the present disclosure only and should not be construed as limitation of the present disclosure.

For example, in other alternative embodiments, in the case that the first length is fixed, different mapping relationships may be used to determine different coding modes based on the first length, which is not specifically limited in the present disclosure.

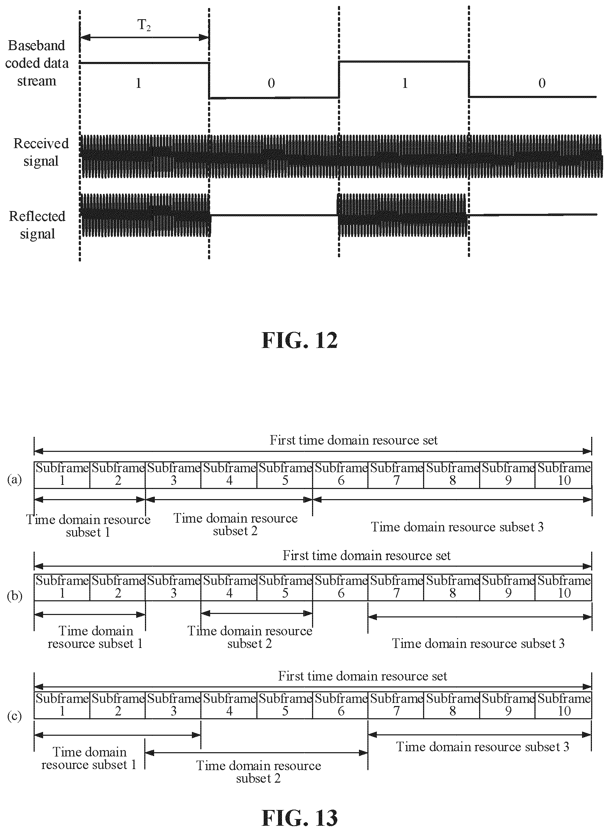

FIG. 11 and FIG. 12 are schematic diagrams of OOK modulation based on different code unit lengths provided by embodiments of the present disclosure.

Exemplarily, the code unit length illustrated in FIG. 11 is T₁, and the code unit length illustrated in FIG. 12 is T₂.

In other words, when the first length is L₁, the communication device may adaptively adjust the at least one code unit length to T₁ based on the first length. When the first length is L₂, the communication device may adaptively adjust the at least one code unit length to T₂ based on the first length. Furthermore, in the examples illustrated in FIG. 11 and FIG. 12, when the same coding mode is used, since T₁ has a higher transmission rate, thus if L₁ < L₂, i.e. the first length is small, the at least one code unit length may be adaptively adjusted to a smaller code unit length based on the first length, which is beneficial to improving the data transmission rate; when the first length is large, the at least one code unit length may be adaptively adjusted to a larger code unit length based on the first length, which is beneficial to improving the reliability of data transmission. Therefore, the reliability of data transmission or the data transmission rate can be adaptively improved, and the interference deletion processing can be facilitated at the receiving end, thereby improving the data transmission performance and the integrity of the data transmission.

It should be understood that FIG. 11 and FIG. 12 are merely examples of the present disclosure and should not be construed as limiting the present disclosure.

For example, in other alternative embodiments, in the case that the first length is fixed, different mapping relationships may be used to determine different code unit lengths based on the first length, which is not specifically limited in the present disclosure.

In some embodiments, the operation at S220 may include following operations.

A first time-domain position of the first time-frequency domain resource in time domain is determined.

The at least one code unit length and/or the at least one coding mode are determined based on at least one time domain resource subset corresponding to the first time-domain position.

In the embodiment, the communication device may determine the at least one code unit length and/or the at least one coding mode based on the at least one time domain resource subset corresponding to the first time-domain position. That is, the at least one code unit length and/or the at least one coding mode are associated with the first time-domain position, i.e., the communication device may adaptively adjust the at least one code unit length and/or the at least one coding mode based on the first time-domain position, and further adaptively improve the reliability of data transmission or the data transmission rate based on the first time-domain position, which is beneficial to improving the data transmission performance.

For example, when the channel condition is poor, the at least one code unit length is adaptively adjusted to a larger code unit length and/or the at least one coding mode is adaptively adjusted to a coding mode with a higher reliability through the first time-domain position, so as to improve the reliability of data transmission. When the channel condition is good, the at least one code unit length is adaptively adjusted to a smaller code unit length and/or the at least one coding mode is adaptively adjusted to a coding mode with a higher transmission rate through the first time-domain position, so as to improve the data transmission rate. That is, when the communication device adaptively adjusts the at least one code unit length and/or the at least one coding mode based on the first time-domain position, the reliability of data transmission or the data transmission rate can be adaptively improved, and the interference deletion processing can be facilitated at the receiving end, thereby improving the data transmission performance and the integrity of the data transmission.

For another example, when the channel condition is poor, the at least one code unit length is adaptively adjusted to a smaller code unit length and/or the at least one coding mode is adaptively adjusted to a coding mode with a higher transmission rate through the first time-domain position, so as to further improve the data transmission rate. When the channel condition is good, the at least one code unit length is adaptively adjusted to a larger code unit length and/or the at least one coding mode is adaptively adjusted to a coding mode with a higher reliability through the first time-domain position, so as to further improve the reliability of data transmission. That is, when the communication device adaptively adjusts the at least one code unit length and/or the at least one coding mode based on the first time-domain position, the reliability of data transmission or the data transmission rate can be adaptively improved, and the interference deletion processing can be facilitated at the receiving end, thereby improving the data transmission performance and the integrity of the data transmission.

In addition, when the coding mode and/or the code unit length are associated with the position of the time-frequency domain resource in time domain, multiple coding modes and/or multiple code unit lengths may be associated with the time domain resource in the same position. That is to say, multiple terminal devices may use the same time domain resource and adopt different coding modes and/or code unit lengths for data transmission, thereby not only reducing the interference between the multiple terminal devices, but also improving the multiplexing degree of the time domain resources by the terminal devices, and further improving the number of terminal devices accessed in a unit time resource, so as to improve the system performance. Particularly, thousands of zero-power terminals may be supported to access to a communication network and implement wireless communication in the communication network.

As an example, the terminal device may determine the first time-domain position according to a pre-configured first time-frequency domain resource or a first time-frequency domain resource scheduled by the network device, and determine the at least one code unit length and/or the at least one coding mode based on at least one time domain resource subset corresponding to the first time-domain position. Since the first time-frequency domain resource is scheduled by the network device or pre-configured, the understanding of the network device for the first time-frequency domain resource can be consistent with that of the terminal device. Based on this, the network device may also determine the at least one code unit length and/or the at least one coding mode based on at least one time domain resource subset corresponding to the first time-domain position.

It should be noted that the specific implementation of the time domain resource subset is not limited in the present disclosure.

Exemplarily, the units of the time domain resource subset include, but are not limited to, symbols, slots, subframes, frames, milliseconds, seconds. Alternatively, the first time domain resource may include at least one time domain resource unit, and a time domain resource unit includes, but is not limited to, a symbol, slot, subframe, frame, millisecond, second, etc.

In some embodiments, the operation at S220 may include following operation.

At least one code unit length corresponding to the at least one time domain resource subset is determined based on a second mapping relationship. The at least one code unit length used for the first data is determined according to the at least one code unit length corresponding to the at least one time domain resource subset, and the second mapping relationship includes a correspondence between each time domain resource subset in a first time domain resource set and at least one code unit length corresponding to the time domain resource subset, and the first time domain resource set includes the at least one time domain resource subset.

As an example, the communication device may determine at least one code unit length corresponding to the at least one time domain resource subset based on the second mapping relationship, and determine the at least one code unit length based on the at least one code unit length corresponding to the at least one time domain resource subset. For example, when the at least one code unit length corresponding to the at least one time domain resource subset is one code unit length, the communication device may determine the one code unit length as the at least one code unit length. For another example, when the at least one code unit length corresponding to the at least one time domain resource subset is multiple code unit lengths, the communication device may determine the multiple code unit lengths as the at least one code unit length, or determine part of the multiple code unit lengths as the at least one code unit length.

In some embodiments, two adjacent time domain resource subsets in the first time domain resource set are continuous, or there is an interval between the two time domain resource subsets, or the two time domain resource subsets have or more overlapping resources.

Exemplarily, the two adjacent time domain resource subsets may be each pair of two adjacent time domain resource subsets in the first time domain resource set.

Exemplarily, the two adjacent time domain resource subsets may be a pair of two adjacent time domain resource subsets in the first time domain resource set.

FIG. 13 is a schematic diagram of a relationship between a first time domain resource set and at least one time domain resource subset provided by an embodiment of the present disclosure.

As illustrated in FIG. 13, assuming that the time domain length of the first time domain resource set is a time domain length of one frame, the time domain length of one frame may be divided. For example, the time domain length of one frame may be divided into three time domain resource subsets. Two adjacent time domain resource subsets in the three time domain resource subsets are continuous, or there is an interval between the two time domain resource subsets, or the two time domain resource subsets have overlapping resources. For example, when each pair of two adjacent time domain resource subsets in the first time domain resource set is continuous, as illustrated in (a) in FIG. 13, the time domain resource subset 1 in the three time domain resource subsets may include subframes 1 to 2, the time domain resource subset 2 in the three time domain resource subsets may include subframes 3 to 5, and the time domain resource subset 3 in the three time domain resource subsets may include subframes 6 to 10. As another example, when there is an interval between each pair of two adjacent time domain resource subsets in the first time domain resource set, as illustrated in (b) in FIG. 13, the time domain resource subset 1 in the three time domain resource subsets may include subframes 1 to 2, the time domain resource subset 2 in the three time domain resource subsets may include subframes 4 to 5, and the time domain resource subset 3 in the three time domain resource subsets may include subframes 7 to 10. For another example, when a pair of two adjacent time domain resource subsets in the first time domain resource set has overlapping resources, as illustrated in (c) in FIG. 13, the time domain resource subset 1 in the three time domain resource subsets may include subframes 1 to 3, the time domain resource subset 2 in the three time domain resource subsets may include subframes 3 to 6, and the time domain resource subset 3 in the three time domain resource subsets may include subframes 7 to 10, that is, the time domain resource subset 1 and the time domain resource subset 2 have an overlapping subframe 3.

In some embodiments, different time domain resource subsets in the first time domain resource set have different time domain lengths, or part or all of time domain resource subsets in the first time domain resource set have the same time domain length.

Exemplarily, assuming that the time domain length of the first time domain resource set is a time domain length of one frame, the time domain length of one frame may be divided to obtain at least one time domain resource subset. For example, n time domain resource subsets are obtained, and n is a natural number greater than 1, such as 2, 3, 4, 5, etc. For example, the time domain length of one frame may be divided into three time domain resource subsets, time domain lengths of part or all of the three time domain resource subsets may be the same or different from each other. For example, as illustrated in (a) of FIG. 13, time domain lengths of all of the three time domain resource subsets may be different from each other. For another example, as illustrated in (b) of FIG. 13, time domain lengths of the time domain resource subset 1 and the time domain resource subset 2 in the three time domain resource subsets are the same. For another example, as illustrated in (c) of FIG. 13, time domain lengths of the time domain resource subset 2 and the time domain resource subset 3 in the three time domain resource subsets are the same.

In some embodiments, the time domain length of the first time domain resource set is an integral multiple of a time unit.

Exemplarily, the time domain length of each of the at least one time domain resource subsets is an integral multiple of a time unit.

In some embodiments, different time domain resource subsets in the first time domain resource set correspond to different coding modes and/or different code unit lengths, or part of time domain resource subsets in the first time domain resource set correspond to a same coding mode and/or a same code unit length.

Exemplarily, the code unit length and the time domain resource subset in the first time domain resource set may be in one-to-one correspondence, and may also be in one-to-many or many-to-one correspondence.

Exemplarily, the code unit length and the time domain resource subset in the first time domain resource set may be in one-to-one correspondence, and may also be in one-to-many or many-to-one correspondence.

In some embodiments, the at least one time domain resource subset includes at least one of: a time domain resource subset included in the first time-domain position; or a time domain resource subset partially overlapped with the first time-domain position.

Exemplarily, the at least one time domain resource subset includes a time domain resource subset in the first time domain resource set that completely or partially overlaps with the first time-domain position.

In some embodiments, the at least one code unit length is at least one code unit length corresponding to the at least one time domain resource subset. The method 200 may further include following operations.

The first data is transmitted by using a code unit length corresponding to a first time domain resource subset in the at least one time domain resource subset at a position in the first time-domain position that partially or completely overlaps with the first time domain resource subset; and/or, the first data is transmitted by using a preset code unit length at a position in the first time-domain position that does not overlap with the at least one time domain resource subset.

Exemplarily, the preset code unit length includes, but is not limited to, at least one of: a code unit length corresponding to an i-th time domain resource subset in the at least one time domain resource subset, or a pre-configured code unit length. As an example, the i-th time domain resource subset may be the first time domain resource subset in the at least one time domain resource subset, the last time domain resource subset in the at least one time domain resource subset, or any time domain resource subset between the first time domain resource subset and the last time domain resource subset in the at least one time domain resource subset. Exemplarily, i is pre-configured, determined by the terminal device, or determined based on information indicated by the network device.

As an example, when two adjacent time domain resource subsets in the first time domain resource set are continuous, the first data is transmitted by using a code unit length corresponding to a first time domain resource subset in the at least one time domain resource subset at a position in the first time-domain position that partially or completely overlaps with the first time domain resource subset.

As an example, when there is an interval between two adjacent time domain resource subsets in the first time domain resource set and there is no interval between the time domain resource subsets included in the first time-domain position, the first data is transmitted by using a code unit length corresponding to a first time domain resource subset in the at least one time domain resource subset at a position in the first time-domain position that partially or completely overlaps with the first time domain resource subset.

As an example, when there is an interval between two adjacent time domain resource subsets in the first time domain resource set and there is an interval between time domain resource subsets included in the first time-domain position, the first data is transmitted by using a code unit length corresponding to a first time domain resource subset in the at least one time domain resource subset at a position in the first time-domain position that partially or completely overlaps with the first time domain resource subset, and the first data is transmitted by using a preset code unit length at a position in the first time-domain position that does not overlap with the at least one time domain resource subset.

As an example, when the first time-domain position does not overlap with the at least one time domain resource subset, the first data is transmitted by using a preset code unit length at a position in the first time-domain position that does not overlap with the at least one time domain resource subset.

In some embodiments, the at least one code unit length is a code unit length corresponding to a second time domain resource subset in the at least one time domain resource subset. The method 200 may further include following operation.

The first data is transmitted by using the code unit length corresponding to the second time domain resource subset at the first time-domain position.

Exemplarily, the second time domain resource subset includes, but is not limited to, the j-th time domain resource subset in the at least one time domain resource subset. As an example, the j-th time domain resource subset may be the first time domain resource subset in the at least one time domain resource subset, the last time domain resource subset in the at least one time domain resource subset, or any time domain resource subset between the first time domain resource subset and the last time domain resource subset in the at least one time domain resource subset. Exemplarily, j is pre-configured, determined by the terminal device, or determined based on information indicated by the network device.

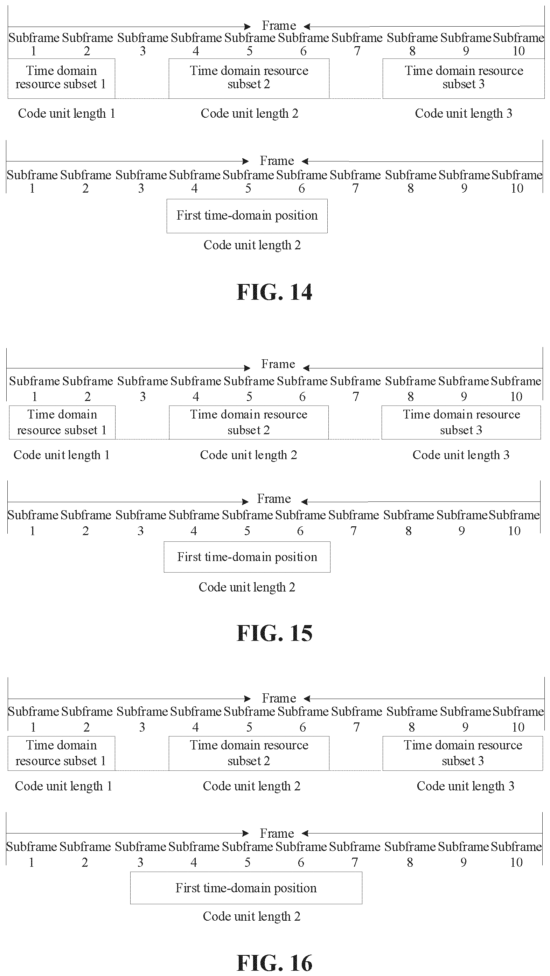

FIG. 14 to FIG. 18 are examples of at least one code unit length provided by embodiments of the present disclosure.

As illustrated in FIG. 14 to FIG. 18, assuming that the time domain length of the first time domain resource set is a time domain length of one frame, the time domain length of one frame may be divided. For example, the time domain length of one frame may be divided into three time domain resource subsets. There is an interval between two adjacent time domain resource subsets in the three time domain resource subsets. The time domain resource subset 1 in the three time domain resource subsets may include subframes 1 to 2, the time domain resource subset 2 in the three time domain resource subsets may include subframes 4 to 6, and the time domain resource subset 3 in the three time domain resource subsets may include subframes 8 to 10. The time domain resource subset 1 corresponds to the code unit length 1, the time domain resource subset 2 corresponds to the code unit length 2, and the time domain resource subset 3 corresponds to the code unit length 3.

As an example, as illustrated in FIG. 14, when the first time-domain position completely overlaps with the time domain resource subset 2, the first data is transmitted on the time domain resource subset 2 by using the code unit length 2 corresponding to the time domain resource subset 2.

As another example, as illustrated in FIG. 15, when the first time-domain position partially overlaps with the time domain resource subset 2, and the first time-domain position includes the time domain resource subset 2, the first data is transmitted at the first time-domain position by using the code unit length 2 corresponding to the time domain resource subset 2.

As another example, as illustrated in FIG. 16, when the first time-domain position partially overlaps with the time domain resource subset 2, and the first time-domain position includes the time domain resource subset 2 and part or all of the interval between the time domain resource subsets, the first data is transmitted at the first time-domain position by using the code unit length 2 corresponding to the time domain resource subset 2.

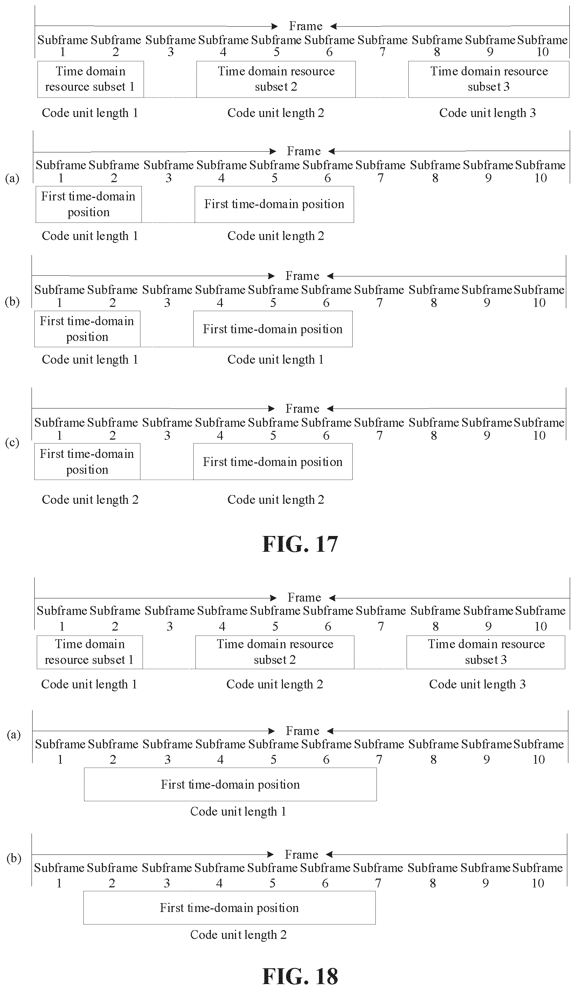

As another example, as illustrated in FIG. 17, when the first time-domain position completely overlaps with the time domain resource subset 1 and the time domain resource subset 2, in one implementation, as illustrated in (a) of FIG. 17, the first data may be transmitted on the time domain resource subset 1 by using the code unit length 1 corresponding to the time domain resource subset 1, and the first data may be transmitted on the time domain resource subset 2 by using the code unit length 2 corresponding to the time domain resource subset 2. In another implementation, as illustrated in (b) of FIG. 17, the first data may be transmitted on both the time domain resource subset 1 and the time domain resource subset 2 by using the code unit length 1 corresponding to the time domain resource subset 1. In another implementation, as illustrated in (c) of FIG. 17, the first data may be transmitted on both the time domain resource subset 1 and the time domain resource subset 2 by using the code unit length 2 corresponding to the time domain resource subset 2.

As another example, as illustrated in FIG. 18, when the first time-domain position partially overlaps with the time domain resource subset 1 and completely overlaps with the time domain resource subset 2, and the first time-domain position further includes the interval between the time domain resource subset 1 and the time domain resource subset 2, in one implementation, as illustrated in (a) of FIG. 18, the first data may be transmitted at the first time-domain position by using the code unit length 1 corresponding to the first time domain resource subset (i.e., the time domain resource subset 1) of the time domain resource subset 1 and the time domain resource subset 2. In another implementation, as illustrated in (b) of FIG. 18, the first data may be transmitted at the first time-domain position by using the code unit length 2 corresponding to the last time domain resource subset (i.e. the time domain resource subset 2) of the time domain resource subset 1 and the time domain resource subset 2.

It should be noted that FIG. 14 to FIG. 18 are merely examples of the present disclosure and should not be construed as limitation of the present disclosure.

For example, in other alternative embodiments, appropriate modifications may be made based on the technical solutions provided by the present disclosure. Taking FIG. 18 as an example, in other alternative embodiments, the first data may be transmitted by using the code unit length 1 corresponding to the time domain resource subset 1 in the three time domain resource subsets at a position in the first time-domain position that partially overlaps with the time domain resource subset 1. The first data may be transmitted by using the code unit length 2 corresponding to the time domain resource subset 2 in the three time domain resource subsets at a position in the first time-domain position that completely overlaps with the time domain resource subset 2. The first data is transmitted by using a preset code unit length at a position in the first time-domain position that does not overlap with the time domain resource subset 1 and the time domain resource subset 2. For example, the preset code unit length may be the code unit length 1 corresponding to the time domain resource subset 1, or the code unit length 2 corresponding to the time domain resource subset 2, which is not specifically limited in the present disclosure.

In some embodiments, the second mapping relationship is determined by the communication device from multiple mapping relationships.

Exemplarily, the multiple mapping relationships may be pre-configured, configured by the network device, or determined by the terminal device.

Exemplarily, the multiple mapping relationships may be determined by the terminal device. Further, the terminal device may transmit information indicating the multiple mapping relationships to the network device.

It should be noted that each of the multiple mapping relationships may be used to define the code unit length corresponding to each time domain resource subset in the first time domain resource set, but the correspondence between the time domain resource subsets and the code unit lengths in different mapping relationships is different. In other alternative embodiments, the mapping relationship may also be referred to as a mapping pattern.

In some embodiments, the second mapping relationship is determined from the multiple mapping relationships based on relevant information of a terminal device, and/or the second mapping relationship is determined from the multiple mapping relationships based on information indicated by a network device.

Exemplarily, the second mapping relationship is determined by a terminal device or a network device from the multiple mapping relationships based on relevant information of the terminal device. Further, the terminal device may report the relevant information of the terminal device to the network device.

Exemplarily, the relevant information of the terminal device includes, but is not limited to, an identity of the terminal device and/or a cell identity for the terminal device.

Exemplarily, the second mapping relationship may be obtained through processing the identity of the terminal device according to a preset rule by the communication device. For example, the second mapping relationship may be obtained through calculating the relevant information of the terminal device according to a preset rule in a preset calculation mode by the communication device. For example, the second mapping relationship may be obtained through performing modulo operation on the relevant information or part of the relevant information of the terminal device based on the number of the multiple mapping relationships by the communication device.

Exemplarily, the second mapping relationship is a mapping relationship indicated by a network device.

In some embodiments, the operation at S220 may include following operation.

At least one coding mode corresponding to the at least one time domain resource subset is determined based on a third mapping relationship.

The at least one coding mode used for the first data is determined according to the at least one coding mode corresponding to the at least one time domain resource subset. The third mapping relationship includes a correspondence between each time domain resource subset in the first time domain resource set and a coding mode corresponding to the time domain resource subset, and the first time domain resource set includes the at least one time domain resource subset.

As an example, the communication device may determine at least one coding mode corresponding to the at least one time domain resource subset based on the third mapping relationship, and determine the at least one coding mode used for the first data based on the at least one coding mode corresponding to the at least one time domain resource subset. For example, when the at least one coding mode corresponding to the at least one time domain resource subset is one coding mode, the communication device may determine the one coding mode as the at least one coding mode. For another example, when the at least one coding mode corresponding to the at least one time domain resource subset is multiple coding modes, the communication device may determine the multiple coding modes as the at least one coding mode, or determine part of the multiple coding modes as the at least one coding mode.

It should be understood that the description of the first time domain resource set and at least one time domain resource subset in this embodiment may refer to the relevant description in the second mapping relationship mentioned above, and will not be repeated herein to avoid repetition. Furthermore, it should be understood that the second mapping relationship and the third mapping relationship in the present disclosure may be regarded as two independent mapping relationships or may be combined into one mapping relationship, which is not specifically limited in the present disclosure. For example, when the second mapping relationship and the third mapping relationship are combined into one mapping relationship, the one mapping relationship may include a correspondence between each time domain resource subset in the first time domain resource set and at least one coding mode and/or at least one code unit length corresponding to the time domain resource subset.

In some embodiments, the at least one coding mode is at least one coding mode corresponding to the at least one time domain resource subset. The method 200 may further include following operations.

The first data is transmitted by using a coding mode corresponding to a first time domain resource subset in the at least one time domain resource subset at a position in the first time-domain position that partially or completely overlaps with the first time domain resource subset; and/or, the first data is transmitted by using a preset coding mode at a position in the first time-domain position that does not overlap with the at least one time domain resource subset.

As an example, the preset coding mode includes, but is not limited to, at least one of: a coding mode corresponding to the i-th time domain resource subset in the at least one time domain resource subset, or a pre-configured coding mode. As an example, the i-th time domain resource subset may be the first time domain resource subset in the at least one time domain resource subset, the last time domain resource subset in the at least one time domain resource subset, or any time domain resource subset between the first time domain resource subset and the last time domain resource subset in the at least one time domain resource subset. Exemplarily, i is pre-configured, determined by the terminal device, or determined based on information indicated by the network device.

As an example, when two adjacent time domain resource subsets in the first time domain resource set are continuous, the first data is transmitted by using a coding mode corresponding to a first time domain resource subset in the at least one time domain resource subset at a position in the first time-domain position that partially or completely overlaps with the first time domain resource subset.

As an example, when there is an interval between two adjacent time domain resource subsets in the first time domain resource set and there is no interval between time domain resource subsets included in the first time-domain position, the first data is transmitted by using a coding mode corresponding to a first time domain resource subset in the at least one time domain resource subset at a position in the first time-domain position that partially or completely overlaps with the first time domain resource subset.

As an example, when there is an interval between two adjacent time domain resource subsets in the first time domain resource set and there is an interval between time domain resource subsets included in the first time-domain position, the first data is transmitted by using a coding mode corresponding to a first time domain resource subset in the at least one time domain resource subset at a position in the first time-domain position that partially or completely overlaps with the first time domain resource subset, and the first data is transmitted by using a preset coding mode at a position in the first time-domain position that does not overlap with the at least one time domain resource subset.

As an example, when the first time-domain position does not overlap with the at least one time domain resource subset, the first data is transmitted by using a preset coding mode at a position in the first time-domain position that does not overlap with the at least one time domain resource subset.

In some embodiments, the at least one coding mode is a coding mode corresponding to a second time domain resource subset in the at least one time domain resource subset. The method 200 may further include following operation.

The first data is transmitted by using the coding mode corresponding to the second time domain resource subset at the first time-domain position.

Exemplarily, the second time domain resource subset includes, but is not limited to, the j-th time domain resource subset in the at least one time domain resource subset. As an example, the j-th time domain resource subset may be the first time domain resource subset in the at least one time domain resource subset, the last time domain resource subset in the at least one time domain resource subset, or any time domain resource subset between the first time domain resource subset and the last time domain resource subset in the at least one time domain resource subset. Exemplarily, j is pre-configured, determined by the terminal device, or determined based on information indicated by the network device.

It should be understood that the solution in which the communication device determines the at least one coding mode based on the third mapping relationship may refer to the solution in which the communication device determines the at least one code unit length based on the second mapping relationship, which will not be repeated herein to avoid repetition.

In some embodiments, the third mapping relationship is determined by the communication device from multiple mapping relationships.

Exemplarily, the multiple mapping relationships may be pre-configured, configured by the network device, or determined by the terminal device.

Exemplarily, the multiple mapping relationships may be determined by the terminal device, and further, the terminal device may transmit information indicating the multiple mapping relationships to the network device.

It should be noted that each of the multiple mapping relationships may be used to define the code unit length and/or the coding mode corresponding to each length group in the at least one length group, but in different mapping relationships, the correspondence between the length groups and the code unit lengths is different, and/or the correspondence between the length groups and the coding modes is different. In other alternative embodiments, the mapping relationship may also be referred to as a mapping pattern.

In some embodiments, the third mapping relationship is determined from the multiple mapping relationships based on relevant information of a terminal device, and/or the third mapping relationship is determined from the multiple mapping relationships based on information indicated by a network device.

Exemplarily, the third mapping relationship is determined by a terminal device or a network device from the multiple mapping relationships based on relevant information of the terminal device. Further, the terminal device may report the relevant information of the terminal device to the network device.

Exemplarily, the relevant information of the terminal device includes, but is not limited to, an identity of the terminal device and/or a cell identity for the terminal device.

Exemplarily, the third mapping relationship may be obtained through processing the identity of the terminal device according to a preset rule by the communication device. For example, the third mapping relationship may be obtained through calculating the relevant information of the terminal device according to a preset rule in a preset calculation mode by the communication device. For example, the third mapping relationship may be obtained through performing modulo operation on the relevant information or part of the relevant information of the terminal device based on the number of the multiple mapping relationships by the communication device.

Exemplarily, the third mapping relationship is a mapping relationship indicated by a network device.

In some embodiments, the operation at S220 may include following operations.

A first width of the first time-frequency domain resource in frequency domain is determined.

A first width group to which the first width belongs is determined.

At least one first code unit length corresponding to the first width group is determined as the at least one code unit length based on a fourth mapping relationship, and/or at least one first coding mode corresponding to the first width group is determined as the at least one coding mode based on the fourth mapping relationship. The fourth mapping relationship includes a correspondence between each width group in at least one width group and at least one code unit length and/or at least one coding mode corresponding to the width group, and the at least one width group includes the first width group.

In the embodiment, the at least one code unit length corresponding to the first width group is determined as the at least one code unit length used for the first data, and/or the at least one coding mode corresponding to the first width group is determined as the at least one coding mode used for the first data. That is, the at least one code unit length and/or the at least one coding mode are associated with the first width, that is, the communication device may adaptively adjust the at least one code unit length and/or the at least one coding mode based on the first width, and further adaptively improve the reliability of data transmission or the data transmission rate based on the first width, which is beneficial to improving the data transmission performance.

For example, when the channel condition is poor or the first width is small, the at least one code unit length is adaptively adjusted to a larger code unit length and/or the at least one coding mode is adaptively adjusted to a coding mode with a higher reliability through the first width, so as to improve the reliability of data transmission. When the channel condition is good or the first width is large, the at least one code unit length is adaptively adjusted to a smaller code unit length and/or the at least one coding mode is adaptively adjusted to a coding mode with a higher transmission rate through the first width, so as to improve the data transmission rate. That is, when the communication device adaptively adjusts the at least one code unit length and/or the at least one coding mode based on the first width, the reliability of data transmission or the data transmission rate can be adaptively improved, and the interference deletion processing can be facilitated at the receiving end, thereby improving the data transmission performance and the integrity of the data transmission.

For another example, when the channel condition is poor or the first width is small, the at least one code unit length is adaptively adjusted to a larger code unit length and/or the at least one coding mode is adaptively adjusted to a coding mode with a higher transmission rate through the first width, so as to further improve the data transmission rate. When the channel condition is good or the first width is large, the at least one code unit length is adaptively adjusted to a larger code unit length and/or the at least one coding mode is adaptively adjusted to a coding mode with a higher reliability through the first width, so as to further improve the reliability of data transmission. That is, when the communication device adaptively adjusts the at least one code unit length and/or the at least one coding mode based on the first width, the reliability of data transmission or the data transmission rate can be adaptively improved, and the interference deletion processing can be facilitated at the receiving end, thereby improving the data transmission performance and the integrity of the data transmission.

In addition, when the coding mode and/or code unit length are associated with the width of the time-frequency domain resource in frequency domain, multiple coding modes and/or multiple code unit lengths may be associated with the frequency domain resource(s) with a same width or even a same position. That is, multiple terminal devices may use the same frequency domain resource and adopt different coding modes and/or code unit lengths for data transmission, thereby not only reducing the interference between the multiple terminal devices, but also improving the multiplexing degree of the frequency domain resources by the terminal devices, and further increasing the number of terminal devices accessed in a unit frequency domain resource, so as to improve the system performance. Particularly, thousands of zero-power terminals may be supported to access to a communication network and implement wireless communication in the communication network.

As an example, the terminal device may determine the first width according to a pre-configured first time-frequency domain resource or a first time-frequency domain resource scheduled by the network device, and determine at least one code unit length corresponding to the first width group including the first width as the at least one code unit length based on the fourth mapping relationship, and/or determine at least one coding mode corresponding to the first width group as the at least one coding mode based on the fourth mapping relationship. Since the first time-frequency domain resource is scheduled by the network device or pre-configured, the understanding of the network device for the first time-frequency domain resource can be consistent with that of the terminal device. Based on this, the network device may also determine at least one code unit length corresponding to the first width group including the first width as the at least one code unit length, and/or determine at least one coding mode corresponding to the first width group as the at least one coding mode based on the fourth mapping relationship.

In some embodiments, the at least one width group includes a group obtained by dividing frequency domain resources of a preset width.

Exemplarily, the at least one width group includes a group obtained by dividing time-frequency resources of the preset width based on multiple thresholds.

Exemplarily, the at least one width group includes u width groups obtained based on u thresholds, where each of the u width groups corresponds to one coding mode and/or code unit length. For example, assuming Yᵤ represents the u-th threshold, the value range of the frequency domain resource corresponding to the first width group in the u width groups is [1, Y₁], the value range of the frequency domain resource corresponding to the second width group in the u width groups is [Y₁, Y₂], and so on, and the value range of the frequency domain resource corresponding to the u-th width group in the u width groups is [Yᵤ₋₁, Yᵤ].

In some embodiments, the at least one width group includes a group obtained by dividing at least one frequency domain resource width.

Exemplarily, taking the at least one frequency domain resource width including Y₁, Y₂, Y₃, Y₄ and Y₅ in ascending order (from small to large) as an example, in the embodiment, the communication device may obtain two width groups by dividing Y₁, Y₂, Y₃, Y₄ and Y₅, frequency domain resource widths in the first width group of the two width groups include Y₁, Y₂ and Y₃, and frequency domain resource widths in the second width group of the two width groups include Y₄ and Y₅.

In other alternative embodiments, the at least one frequency domain resource width may be another number of frequency domain resource widths. Alternatively, three width groups or four width groups may be obtained by dividing Y₁, Y₂, Y₃, Y₄, and Y₅, etc., which is not specifically limited in the present disclosure.

In some embodiments, each of the at least one frequency domain resource width is an integral multiple of a frequency domain resource unit. When the first width is not an integral multiple of the frequency domain resource unit, the first width is rounded up or down to obtain a second width. A group to which the second width belongs is determined as the first width group.

Exemplarily, when the at least one frequency domain resource width does not include the first width, a frequency domain resource width closest to the first width is determined from the at least one frequency domain resource width, and a width group including the frequency domain resource width closest to the first width is determined as the first width group. For example, a width group to which a frequency domain resource width greater than and closest to the first width belongs may be determined as the first width group. For another example, a width group to which a frequency domain resource width less than the first width and closest to the first width belongs may be determined as the first width group.

Exemplarily, taking the at least one frequency domain resource width including Y₁, Y₂, Y₃, Y₄ and Y₅ in ascending order as an example, in the embodiment, the communication device may obtain two width groups by dividing Y₁, Y₂, Y₃, Y₄ and Y₅, the frequency domain resource widths in the first width group of the two width groups include Y₁, Y₂ and Y₃, and the frequency domain resource widths in the second width group of the two width groups include Y₄ and Y₅. In this case, if the first width Yₜ is a value between Y₃ and Y₄, the second width group including Y₄ (which is greater than Yₜ and closest to Yₜ) may be determined as the first width group, or the first width group including Y₃ (which is less than Yₜ and closest to Yₜ) may be determined as the first width group.

In some embodiments, different width groups in the at least one width group correspond to different coding modes and/or different code unit lengths, or part of the at least one width group correspond to a same coding mode and/or a same code unit length.

Exemplarily, the width groups and the coding modes in the fourth mapping relationship may be in one-to-one correspondence, and may also be in one-to-many or many-to-one correspondence

Exemplarily, the width groups and the code unit lengths in the fourth mapping relationship may be in one-to-one correspondence, and may also be in one-to-many or many-to-one correspondence.

In some embodiments, the fourth mapping relationship is determined by the communication device from multiple mapping relationships.

Exemplarily, the multiple mapping relationships may be pre-configured, configured by the network device, or determined by the terminal device.

Exemplarily, the multiple mapping relationships may be determined by the terminal device, and further, the terminal device may transmit information indicating the multiple mapping relationships to the network device.

It should be noted that each of the multiple mapping relationships may be used to define the code unit length and/or the coding mode corresponding to each width group in the at least one width group, but in different mapping relationships, the correspondence between the width group and the code unit length is different, and/or the correspondence between the width group and the coding mode is different. In other alternative embodiments, the mapping relationship may also be referred to as a mapping pattern.

In some embodiments, the fourth mapping relationship is determined from the multiple mapping relationships based on relevant information of a terminal device, and/or the fourth mapping relationship is determined from the multiple mapping relationships based on information indicated by a network device.

Exemplarily, the fourth mapping relationship is determined by a terminal device or a network device from the multiple mapping relationships based on relevant information of the terminal device. Further, the terminal device may report the relevant information of the terminal device to the network device.

Exemplarily, the relevant information of the terminal device includes, but is not limited to, an identity of the terminal device and/or a cell identity for the terminal device.

Exemplarily, the fourth mapping relationship may be obtained through processing the identity of the terminal device according to a preset rule by the communication device. For example, the fourth mapping relationship may be obtained through calculating the relevant information of the terminal device according to a preset rule in a preset calculation mode by the communication device. For example, the fourth mapping relationship may be obtained through performing modulo operation on the relevant information or part of the relevant information of the terminal device based on the number of the multiple mapping relationships by the communication device.

Exemplarily, the fourth mapping relationship is a mapping relationship indicated by a network device.

With reference to FIG. 9 and FIG. 10, when the first width is W₁, the communication device may adaptively adjust the at least one coding mode to coding mode 1 based on the first width, and when the first width is W₂, the communication device may adaptively adjust the at least one coding mode to coding mode 2 based on the first width. Furthermore, in the examples illustrated in FIG. 9 and FIG. 10, when the same code unit length is used, since the coding mode 1 has a higher transmission rate, thus if W₁ < W₂, i.e. the first width is small, the communication device may adaptively adjust the first coding mode to a coding mode with a higher transmission rate based on the first width; when the first width is large, the communication device may adaptively adjust the first coding mode to a coding mode with a higher reliability based on the first width. Therefore, the reliability of data transmission or the data transmission rate can be adaptively improved, and the interference deletion processing can be facilitated at the receiving end, thereby improving the data transmission performance and the integrity of the data transmission.

With reference to FIG. 11 and FIG. 12, when the first width is W₁, the communication device may adaptively adjust the at least one code unit length to T₁ based on the first width, and when the first width is W₂, the communication device may adaptively adjust the at least one code unit length to T₂ based on the first width. Furthermore, in the examples illustrated in FIG. 11 and FIG. 12, when the same coding mode is used, since T₁ has a higher transmission rate, thus if W₁ < W₂, i.e. the first width is small, the communication device may adaptively adjust the first code unit length to a smaller code unit length based on the first width, which is beneficial to improving the data transmission rate; when the first width is large, the communication device may adaptively adjust the first code unit length to a larger code unit length based on the first width, which is beneficial to improving the reliability of data transmission. Therefore, the reliability of data transmission or the data transmission rate can be adaptively improved, and the interference deletion processing can be facilitated at the receiving end, thereby improving the data transmission performance and the integrity of the data transmission.

In some embodiments, the operation at S220 may include following operations.

A first frequency-domain position of the first time-frequency domain resource in frequency domain is determined.

The at least one code unit length and/or the at least one coding mode are determined based on at least one frequency domain resource subset corresponding to the first frequency-domain position.

In the embodiment, the communication device may determine the at least one code unit length and/or the at least one coding mode based on the at least one frequency domain resource subset corresponding to the first frequency-domain position. That is, the at least one code unit length and/or the at least one coding mode are associated with the first frequency-domain position, i.e., the communication device may adaptively adjust the at least one code unit length and/or the at least one coding mode based on the first frequency-domain position, and further adaptively improve the reliability of data transmission or the data transmission rate based on the first frequency-domain position, which is beneficial to improving the data transmission performance.

For example, when the channel condition is poor, the at least one code unit length is adaptively adjusted to a larger code unit length and/or the at least one coding mode is adaptively adjusted to a coding mode with a higher reliability through the first frequency-domain position, so as to improve the reliability of data transmission. When the channel condition is good, the at least one code unit length is adaptively adjusted to a smaller code unit length and/or the at least one coding mode is adaptively adjusted to a coding mode with a higher transmission rate through the first frequency-domain position, so as to improve the data transmission rate. That is, when the communication device adaptively adjusts the at least one code unit length and/or the at least one coding mode based on the first frequency-domain position, the reliability of data transmission or the data transmission rate can be adaptively improved, and the interference deletion processing can be facilitated at the receiving end, thereby improving the data transmission performance and the integrity of the data transmission.

For another example, when the channel condition is poor, the at least one code unit length is adaptively adjusted to a larger code unit length and/or the at least one coding mode is adaptively adjusted to a coding mode with a higher transmission rate through the first frequency-domain position, so as to further improve the data transmission rate. When the channel condition is good, the at least one code unit length is adaptively adjusted to a larger code unit length and/or the at least one coding mode is adaptively adjusted to a coding mode with a higher reliability through the first frequency-domain position, so as to further improve the reliability of data transmission. That is, when the communication device adaptively adjusts the at least one code unit length and/or the at least one coding mode based on the first frequency-domain position, the reliability of data transmission or the data transmission rate can be adaptively improved, and the interference deletion processing can be facilitated at the receiving end, thereby improving the data transmission performance and the integrity of the data transmission.

In addition, when the coding mode and/or the code unit length are associated with the position of the time-frequency domain resource in frequency domain, multiple coding modes and/or multiple code unit lengths may be associated with the frequency domain resource in the same position. That is to say, multiple terminal devices may use the same frequency domain resource and adopt different coding modes and/or code unit lengths for data transmission, thereby not only reducing the interference between the multiple terminal devices, but also improving the multiplexing degree of the frequency domain resources by the terminal devices, and further increasing the number of terminal devices accessed in a unit frequency domain resource, so as to improve the system performance. Particularly, thousands of zero-power terminals may be supported to access to a communication network and implement wireless communication in the communication network.

As an example, the terminal device may determine the first frequency-domain position according to a pre-configured first time-frequency domain resource or a first time-frequency domain resource scheduled by the network device, and determine, based on the at least one frequency domain resource subset corresponding to the first frequency-domain position, the at least one code unit length and/or the at least one coding mode. Since the first time-frequency domain resource is scheduled by the network device or pre-configured, the understanding of the network device for the first time-frequency domain resource can be consistent with that of the terminal device. Based on this, the network device may also determine the at least one code unit length and/or the at least one coding mode based on the at least one frequency domain resource subset corresponding to the first frequency-domain position.

It should be noted that the specific implementation of the frequency domain resource subset is not limited in the present disclosure.

Exemplarily, the units of the frequency domain resource subset include, but are not limited to, BWP, Hz, kHz, MHz, etc. Alternatively, the frequency domain resource subset may include at least one frequency domain resource unit, and a frequency domain resource unit includes, but is not limited to, BWP, Hz, kHz, MHz, etc.

In some embodiments, the operation at S220 may include following operation.

At least one code unit length corresponding to the at least one frequency domain resource subset is determined based on a fifth mapping relationship. The at least one code unit length used for the first data is determined according to the at least one code unit length corresponding to the at least one frequency domain resource subset, and the fifth mapping relationship includes a correspondence between each frequency domain resource subset in a first frequency domain resource set and at least one code unit length corresponding to the frequency domain resource subset, and the first frequency domain resource set includes the at least one frequency domain resource subset.

As an example, the communication device may determine at least one code unit length corresponding to the at least one frequency domain resource subset based on the fifth mapping relationship, and determine the at least one code unit length used for the first data based on the at least one code unit length corresponding to the at least one frequency domain resource subset. For example, when the at least one code unit length corresponding to the at least one frequency domain resource subset is one code unit length, the communication device may determine the one code unit length as the at least one code unit length used for the first data. For another example, when the at least one code unit length corresponding to the at least one frequency domain resource subset is multiple code unit lengths, the communication device may determine the multiple code unit lengths as the at least one code unit length, or determine part of the multiple code unit lengths as the at least one code unit length.

In some embodiments, two adjacent frequency domain resource subsets in the first frequency domain resource set are continuous, or there is an interval between the two frequency domain resource subsets, or the two frequency domain resource subsets have overlapping resources.

Exemplarily, the two adjacent frequency domain resource subsets are each pair of two adjacent frequency domain resource subsets in the first frequency domain resource set.

Exemplarily, the two adjacent frequency domain resource subsets are a pair of two adjacent frequency domain resource subsets in the first frequency domain resource set.

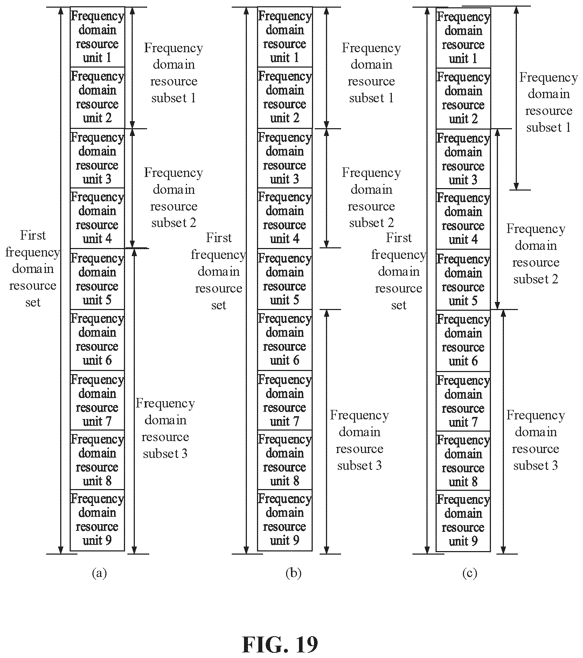

FIG. 19 is a schematic diagram of a relationship between a first frequency domain resource set and at least one frequency domain resource subset provided by an embodiment of the present disclosure.

As illustrated in FIG. 19, assuming that the first frequency domain resource set includes nine frequency domain resource units, the nine frequency domain resource units may be divided. For example, the nine frequency domain resource units may be divided into three frequency domain resource subsets. Two adjacent frequency domain resource subsets of the three frequency domain resource subsets are continuous, or there is an interval between the two frequency domain resource subsets, or the two frequency domain resource subsets have overlapping resources. For example, when each pair of two adjacent frequency domain resource subsets in the first frequency domain resource set is continuous, as illustrated in (a) in FIG. 19, the frequency domain resource subset 1 in the three frequency domain resource subsets may include frequency domain resource units 1 to 2, the frequency domain resource subset 2 in the three frequency domain resource subsets may include frequency domain resource units 3 to 4, and the frequency domain resource subset 3 in the three frequency domain resource subsets may include frequency domain resource units 5 to 9. For another example, when a pair of two adjacent frequency domain resource subsets in the first frequency domain resource set is continuous, and there is an interval between each pair of two adjacent frequency domain resource subsets in the first frequency domain resource set, as illustrated in (b) in FIG. 19, the frequency domain resource subset 1 in the three frequency domain resource subsets may include frequency domain resource units 1 to 2, the frequency domain resource subset 2 in the three frequency domain resource subsets may include frequency domain resource units 3 to 4, and the frequency domain resource subset 3 in the three frequency domain resource subsets may include frequency domain resource units 6 to 9. That is, the frequency domain resource subset 1 and the frequency domain resource subset 2 are continuous, and the frequency domain resource unit 5 is spaced between the frequency domain resource subset 2 and the frequency domain resource subset 3. For another example, when a pair of two adjacent frequency domain resource subsets in the first frequency domain resource set is continuous, and a pair of two adjacent frequency domain resource subsets in the first frequency domain resource set has overlapping resources, as illustrated in (c) in FIG. 13, the frequency domain resource subset 1 in the three frequency domain resource subsets may include frequency domain resource units 1 to 3, the frequency domain resource subset 2 in the three frequency domain resource subsets may include frequency domain resource units 3 to 6, and the frequency domain resource subset 3 in the three frequency domain resource subsets may include frequency domain resource units 6 to 9. That is, the frequency domain resource subset 1 and the frequency domain resource subset 2 have an overlapping frequency domain resource unit 3, and the frequency domain resource subset 2 and the frequency domain resource subset 3 are continuous.

In some embodiments, different frequency domain resource subsets in the first frequency domain resource set have different frequency domain widths, or part or all of frequency domain resource subsets in the first frequency domain resource set have a same frequency domain width.

Exemplarily, assuming that the first frequency domain resource set includes nine frequency domain resource units, the nine frequency domain resource units may be divided. For example, the nine frequency domain resource units may be divided into three frequency domain resource subsets. The frequency domain widths of part or all of the three frequency domain resource subsets may be the same or different from each other. For example, as illustrated in (a), (b) and (c) of FIG. 19, part (i.e., frequency domain resource subset 1 and frequency domain resource subset 2) of the three frequency domain resource subsets have the same frequency domain width.

In some embodiments, the frequency domain width of the first frequency domain resource set is an integral multiple of a frequency domain resource unit.

As an example, the frequency domain width of each of the at least one frequency domain resource subsets is an integral multiple of the frequency domain resource unit.

In some embodiments, different frequency domain resource subsets in the first frequency domain resource set correspond to different coding modes and/or different code unit lengths, or part of frequency domain resource subsets in the first frequency domain resource set correspond to a same coding mode and/or a same code unit length.

Exemplarily, the frequency domain resource subsets in the first frequency domain resource set and the code unit lengths may be in one-to-one correspondence, and may also be in one-to-many or many-to-one correspondence.

Exemplarily, the frequency domain resource subsets in the first frequency domain resource set and the code unit lengths may be in one-to-one correspondence, and may also be in one-to-many or many-to-one correspondence.

In some embodiments, the at least one frequency domain resource subset includes at least one of: a frequency domain resource subset included in the first frequency-domain position, or a frequency domain resource subset partially overlapped with the first frequency-domain position.

Exemplarily, the at least one frequency domain resource subset includes a frequency domain resource subset in the first frequency domain resource set that completely or partially overlaps with the first frequency-domain position.

In some embodiments, the at least one code unit length is at least one code unit length corresponding to the at least one frequency domain resource subset. The method 200 may further include following operations.

The first data is transmitted by using a code unit length corresponding to a first frequency domain resource subset in the at least one frequency domain resource subset at a position in the first frequency-domain position that partially or completely overlaps with the first frequency domain resource subset; and/or, the first data is transmitted by using a preset code unit length at a position in the first frequency-domain position that does not overlap with the at least one frequency domain resource subset.

As an example, the preset code unit length includes, but is not limited to, at least one of: a code unit length corresponding to an i-th frequency domain resource subset in the at least one frequency domain resource subset, or a pre-configured code unit length. As an example, the i-th frequency domain resource subset may be the first frequency domain resource subset in the at least one frequency domain resource subset, the last frequency domain resource subset in the at least one frequency domain resource subset, or any frequency domain resource subset between the first frequency domain resource subset and the last frequency domain resource subset in the at least one frequency domain resource subset. Exemplarily, i is pre-configured, determined by the terminal device, or determined based on information indicated by the network device.

As an example, when two adjacent frequency domain resource subsets in the first frequency domain resource set are continuous, the first data is transmitted by using a code unit length corresponding to a first frequency domain resource subset in the at least one frequency domain resource subset at a position in the first frequency-domain position that partially or completely overlaps with the first frequency domain resource subset.

As an example, when there is an interval between two adjacent frequency domain resource subsets in the first frequency domain resource set and there is no interval between frequency domain resource subsets included in the first frequency-domain position, the first data is transmitted by using a code unit length corresponding to a first frequency domain resource subset in the at least one frequency domain resource subset at a position, in the first frequency-domain position, that partially or completely overlaps with the first frequency domain resource subset.

As an example, when there is an interval between two adjacent frequency domain resource subsets in the first frequency domain resource set and there is an interval between frequency domain resource subsets included in the first frequency-domain position, the first data is transmitted by using a code unit length corresponding to a first frequency domain resource subset in the at least one frequency domain resource subset at a position, in the first frequency-domain position, that partially or completely overlaps with the first frequency domain resource subset, and the first data is transmitted by using a preset code unit length at a position in the first frequency-domain position that does not overlap with the at least one frequency domain resource subset.

As an example, when the first frequency-domain position does not overlap with the at least one frequency domain resource subset, the first data is transmitted by using a preset code unit length at a position in the first frequency-domain position that does not overlap with the at least one frequency domain resource subset.

In some embodiments, the at least one code unit length is a code unit length corresponding to a second frequency domain resource subset in the at least one frequency domain resource subset. The method 200 may further include following operation.

The first data is transmitted by using the code unit length corresponding to the second frequency domain resource subset at the first frequency-domain position.

Exemplarily, the second frequency domain resource subset includes, but is not limited to, the j-th frequency domain resource subset in the at least one frequency domain resource subset. As an example, the j-th frequency domain resource subset may be the first frequency domain resource subset in the at least one frequency domain resource subset, the last frequency domain resource subset in the at least one frequency domain resource subset, or any frequency domain resource subset between the first frequency domain resource subset and the last frequency domain resource subset in the at least one frequency domain resource subset. Exemplarily, j is pre-configured, determined by the terminal device, or determined based on information indicated by the network device.

In some embodiments, the fifth mapping relationship is determined by the communication device from multiple mapping relationships.

Exemplarily, the multiple mapping relationships may be pre-configured, configured by the network device, or determined by the terminal device.

Exemplarily, the multiple mapping relationships may be determined by the terminal device, and further, the terminal device may transmit information indicating the multiple mapping relationships to the network device.

It should be noted that each of the multiple mapping relationships may be used to define the code unit length corresponding to each frequency domain resource subset in the first frequency domain resource set, but the correspondence between the frequency domain resource subsets and the code unit lengths in different mapping relationships is different. In other alternative embodiments, the mapping relationship may also be referred to as a mapping pattern.

In some embodiments, the fifth mapping relationship is determined from the multiple mapping relationships based on relevant information of a terminal device, and/or the fifth mapping relationship is determined from the multiple mapping relationships based on information indicated by a network device.

Exemplarily, the fifth mapping relationship is determined by a terminal device or a network device from the multiple mapping relationships based on relevant information of the terminal device. Further, the terminal device may report the relevant information of the terminal device to the network device.

Exemplarily, the relevant information of the terminal device includes, but is not limited to, an identity of the terminal device and/or a cell identity for the terminal device.

Exemplarily, the fifth mapping relationship may be obtained through processing the identity of the terminal device according to a preset rule by the communication device. For example, the fifth mapping relationship may be obtained through calculating the relevant information of the terminal device according to a preset rule in a preset calculation mode by the communication device. For example, the fifth mapping relationship may be obtained through performing modulo operation on the relevant information or part of the relevant information of the terminal device based on the number of the multiple mapping relationships by the communication device.

Exemplarily, the fifth mapping relationship is a mapping relationship indicated by a network device.

In some embodiments, the operation at S220 may include following operation.

At least one coding mode corresponding to the at least one frequency domain resource subset is determined based on the sixth mapping relationship.

The at least one coding mode used for the first data is determined according to the at least one coding mode corresponding to the at least one frequency domain resource subset, and the sixth mapping relationship includes a correspondence between each frequency domain resource subset in a first frequency domain resource set and at least one coding mode corresponding to the frequency domain resource subset, and the first frequency domain resource set includes the at least one frequency domain resource subset.

Exemplarily, the communication device may determine at least one coding mode corresponding to the at least one frequency domain resource subset based on the sixth mapping relationship, and determine the at least one coding mode used for the first data based on the at least one coding mode corresponding to the at least one frequency domain resource subset. For example, when the at least one coding mode corresponding to the at least one frequency domain resource subset is one coding mode, the communication device may determine the one coding mode as the at least one coding mode. For another example, when the at least one coding mode corresponding to the at least one frequency domain resource subset is multiple coding modes, the communication device may determine the multiple coding modes as the at least one coding mode, or determine part of the multiple coding modes as the at least one coding mode.

It should be understood that the description of the first frequency domain resource set and at least one frequency domain resource subset in this embodiment may refer to the relevant description in the fifth mapping relationship mentioned above, and will not be repeated herein to avoid repetition. Furthermore, it should be understood that the fifth mapping relationship and the sixth mapping relationship in the present disclosure may be regarded as two independent mapping relationships, or may be combined into one mapping relationship, which is not specifically limited in the present disclosure. For example, when the fifth mapping relationship and the sixth mapping relationship are combined into one mapping relationship, the one mapping relationship may include a correspondence between each frequency domain resource subset in the first frequency domain resource set and at least one coding mode and/or at least one code unit length corresponding to the frequency domain resource subset.

In some embodiments, the at least one coding mode used for the first data is the at least one coding mode corresponding to the at least one frequency domain resource subset. The method 200 may further include following operations.

The first data is transmitted by using a coding mode corresponding to a first frequency domain resource subset in the at least one frequency domain resource subset at a position in the first frequency-domain position that partially or completely overlaps with the first frequency domain resource subset; and/or, the first data is transmitted by using a preset coding mode at a position in the first frequency-domain position that does not overlap with the at least one frequency domain resource subset.

As an example, the preset coding mode includes, but is not limited to, at least one of: a coding mode corresponding to the i-th frequency domain resource subset in the at least one frequency domain resource subset, or a pre-configured coding mode. As an example, the i-th frequency domain resource subset may be the first frequency domain resource subset in the at least one frequency domain resource subset, the last frequency domain resource subset in the at least one frequency domain resource subset, or any frequency domain resource subset between the first frequency domain resource subset and the last frequency domain resource subset in the at least one frequency domain resource subset. Exemplarily, i is pre-configured, determined by the terminal device, or determined based on information indicated by the network device.

As an example, when two adjacent frequency domain resource subsets in the first frequency domain resource set are continuous, the first data is transmitted by using a coding mode corresponding to a first frequency domain resource subset in the at least one frequency domain resource subset at a position in the first frequency-domain position that partially or completely overlaps with the first frequency domain resource subset.

As an example, when there is an interval between two adjacent frequency domain resource subsets in the first frequency domain resource set and there is no interval between frequency domain resource subsets included in the first frequency-domain position, the first data is transmitted by using a coding mode corresponding to a first frequency domain resource subset in the at least one frequency domain resource subset at a position in the first frequency-domain position that partially or completely overlaps with the first frequency domain resource subset.

As an example, when there is an interval between two adjacent frequency domain resource subsets in the first frequency domain resource set and there is an interval between frequency domain resource subsets included in the first frequency-domain position, the first data is transmitted by using a coding mode corresponding to a first frequency domain resource subset in the at least one frequency domain resource subset at a position in the first frequency-domain position that partially or completely overlaps with the first frequency domain resource subset, and the first data is transmitted by using a preset coding mode at a position in the first frequency-domain position that does not overlap with the at least one frequency domain resource subset.

As an example, when the first frequency-domain position does not overlap with the at least one frequency domain resource subset, the first data is transmitted by using a preset coding mode at a position, in the first frequency-domain position, that does not overlap with the at least one frequency domain resource subset.

In some embodiments, the at least one coding mode is a coding mode corresponding to a second frequency domain resource subset in the at least one frequency domain resource subset. The method 200 may further include following operation.

The first data is transmitted by using the coding mode corresponding to the second frequency domain resource subset at the first frequency-domain position.

Exemplarily, the second frequency domain resource subset includes, but is not limited to, the j-th frequency domain resource subset in the at least one frequency domain resource subset. As an example, the j-th frequency domain resource subset may be the first frequency domain resource subset in the at least one frequency domain resource subset, the last frequency domain resource subset in the at least one frequency domain resource subset, or any frequency domain resource subset between the first frequency domain resource subset and the last frequency domain resource subset in the at least one frequency domain resource subset. Exemplarily, j is pre-configured, determined by the terminal device, or determined based on information indicated by the network device.

It should be understood that the solution in which the communication device determines the at least one coding mode based on the sixth mapping relationship may refer to the solution in which the communication device determines the at least one code unit length based on the fifth mapping relationship, which will not be repeated herein to avoid repetition.

In some embodiments, the sixth mapping relationship is determined by the communication device from multiple mapping relationships.

Exemplarily, the multiple mapping relationships may be pre-configured, configured by the network device, or determined by the terminal device.

Exemplarily, the multiple mapping relationships may be determined by the terminal device, and further, the terminal device may transmit information indicating the multiple mapping relationships to the network device.

It should be noted that each of the multiple mapping relationships may be used to define the code unit length and/or coding mode corresponding to each width group in the at least one width group, but in different mapping relationships, the correspondence between the width groups and the code unit lengths is different, and/or the correspondence between the width groups and the coding modes is different. In other alternative embodiments, the mapping relationship may also be referred to as a mapping pattern.

In some embodiments, the sixth mapping relationship is determined from the multiple mapping relationships based on relevant information of a terminal device, and/or the sixth mapping relationship is determined from the multiple mapping relationships based on information indicated by a network device.

Exemplarily, the sixth mapping relationship is determined by a terminal device or a network device from the multiple mapping relationships based on relevant information of the terminal device. Further, the terminal device may report the relevant information of the terminal device to the network device.

Exemplarily, the relevant information of the terminal device includes, but is not limited to, an identity of the terminal device and/or a cell identity for the terminal device.

Exemplarily, the sixth mapping relationship may be obtained by the communication device processing the identity of the terminal device according to a preset rule. For example, the sixth mapping relationship may be obtained by the communication device calculating the relevant information of the terminal device according to a preset rule in a preset calculation mode. For example, the sixth mapping relationship may be obtained by the communication device performing modulo operation on the relevant information or part of the relevant information of the terminal device based on the number of the multiple mapping relationships.

Exemplarily, the sixth mapping relationship is a mapping relationship indicated by a network device.

In some embodiments, the operation at S220 may include following operations.

A first number of resource units included in the first time-frequency domain resource is determined.

A first quantity group to which the first number belongs is determined.

At least one code unit length corresponding to the first quantity group is determined as the at least one code unit length based on a seventh mapping relationship, and/or at least one coding mode corresponding to the first quantity group is determined as the at least one coding mode based on the seventh mapping relationship. The seventh mapping relationship includes a correspondence between each quantity group in at least one quantity group and at least one code unit length and/or at least one coding mode corresponding to the quantity group, and the at least one quantity group includes the first quantity group.

In this embodiment, the at least one code unit length corresponding to the first quantity group is determined as the at least one code unit length used for the first data, and/or at least one coding mode corresponding to the first quantity group is determined as the at least one coding mode used for the first data. That is, the at least one code unit length and/or the at least one coding mode are associated with the first number, that is, the communication device may adaptively adjust the at least one code unit length and/or the at least one coding mode based on the first number, and further adaptively improve the reliability of data transmission or the data transmission rate based on the first number, which is beneficial to improving the data transmission performance.

For example, when the channel condition is poor or the first number is small, the at least one code unit length is adaptively adjusted to a larger code unit length and/or the at least one coding mode is adaptively adjusted to a coding mode with a higher reliability through the first number, so as to improve the reliability of data transmission. When the channel condition is good or the first number is large, the at least one code unit length is adaptively adjusted to a smaller code unit length and/or the at least one coding mode is adaptively adjusted to a coding mode with a higher transmission rate through the first number, so as to improve the data transmission rate. That is, when the communication device adaptively adjusts the at least one code unit length and/or the at least one coding mode based on the first number, the reliability of data transmission or the data transmission rate can be adaptively improved, and the interference deletion processing can be facilitated at the receiving end, thereby improving the data transmission performance and the integrity of the data transmission.

For another example, when the channel condition is poor or the first number is small, the at least one code unit length is adaptively adjusted to a larger code unit length and/or the at least one coding mode is adaptively adjusted to a coding mode with a higher transmission rate through the first number, so as to further improve the data transmission rate. When the channel condition is good or the first number is large, the at least one code unit length is adaptively adjusted to a larger code unit length and/or the at least one coding mode is adaptively adjusted to a coding mode with a higher reliability through the first number, so as to further improve the reliability of data transmission. That is, when the communication device adaptively adjusts the at least one code unit length and/or the at least one coding mode based on the first number, the reliability of data transmission or the data transmission rate can be adaptively improved, and the interference deletion processing can be facilitated at the receiving end, thereby improving the data transmission performance and the integrity of the data transmission.

As an example, the terminal device may determine the first number according to a pre-configured first time-frequency domain resource or a first time-frequency domain resource scheduled by the network device, and determine the at least one code unit length corresponding to the first quantity group including the first number as the at least one code unit length, and/or determine the at least one coding mode corresponding to the first quantity group as the at least one coding mode based on the seventh mapping relationship. Since the first time-frequency domain resource is scheduled by the network device or pre-configured, the understanding of the network device for the first time-frequency domain resource can be consistent with that of the terminal device. Based on this, the network device may also determine the at least one code unit length corresponding to the first quantity group including the first number as the at least one code unit length, and/or determine the at least one coding mode corresponding to the first quantity group as the at least one coding mode based on the seventh mapping relationship.

In some embodiments, the at least one quantity group includes a group obtained by dividing a preset number of resource units.

Exemplarily, the at least one quantity group includes a group obtained by dividing the preset number of resource units based on multiple thresholds.

Exemplarily, the at least one quantity group includes v quantity groups obtained based on v thresholds, where each of the v quantity groups corresponds to one coding mode and/or code unit length. For example, assuming that Zᵥ represents the v-th threshold, the value range of the resource unit number corresponding to the first quantity group in the v quantity groups is [1, Z₁], the value range of the resource unit number corresponding to the second quantity group in the v quantity groups is [Z₁, Z₂], and so on, and the value range of the resource unit number corresponding to the v-th quantity group in the v quantity groups is [Zᵥ₋₁, Zᵥ].

In some embodiments, the at least one quantity group includes a group obtained by dividing at least one resource unit number.

Exemplarily, taking the at least one resource unit number including Z₁, Z₂, Z₃, Z₄ and Z₅ in ascending order (from small to large) as an example, in this embodiment, the communication device may obtain two quantity groups by dividing Z₁, Z₂, Z₃, Z₄ and Z₅, the resource unit numbers in the first quantity group of the two quantity groups include Z₁, Z₂ and Z₃, and the resource unit numbers in the second quantity group of the two quantity groups include Z₄ and Z₅.

In other alternative embodiments, the at least one resource unit number may be another number of resource unit numbers. Alternatively, three quantity groups or four quantity groups may be obtained by dividing Z₁, Z₂, Z₃, Z₄ and Z₅, etc., which is not specifically limited in the present disclosure.

In some embodiments, each of the at least one resource unit number is an integral multiple of a resource unit. When the first number is not an integral multiple of the resource unit, the first number is rounded up or down to obtain a second number. A group to which the second number belongs is determined as the first quantity group.

As an example, when the at least one resource unit number does not include the first number, a resource unit number closest to the first number is determined from the at least one resource unit number, and a quantity group including the resource unit number closest to the first number is determined as the first quantity group. For example, a quantity group including a resource unit number greater than the first number and closest to the first number may be determined as the first quantity group. For another example, the quantity group including the resource unit number less than the first number and closest to the first number may be determined as the first quantity group.

Exemplarily, taking the at least one resource unit number including Z₁, Z₂, Z₃, Z₄ and Z₅ in ascending order as an example, in this embodiment, the communication device may obtain two quantity groups by dividing Z₁, Z₂, Z₃, Z₄ and Z₅. The resource unit numbers in the first quantity group of the two quantity groups include Z₁, Z₂ and Z₃, and the resource unit numbers in the second quantity group of the two quantity groups include Z₄ and Z₅. In this case, if the first number Zₜ is a value between Z₃ and Z₄, the second quantity group including Z₄ (which is greater than Zₜ and closest to Zₜ) may be determined as the first quantity group, or the first quantity group including Z₃ (which is less than Zₜ and closest to Zₜ) may be determined as the first quantity group.

In some embodiments, different quantity groups in the at least one quantity group correspond to different coding modes and/or different code unit lengths, or part of the at least one quantity group correspond to a same coding mode and/or a same code unit length.

Exemplarily, the quantity groups and the coding modes in the seventh mapping relationship may be in one-to-one correspondence, and may also be in one-to-many or many-to-one correspondence.

Exemplarily, the quantity groups and the code unit lengths in the seventh mapping relationship may be in one-to-one correspondence, and may also be in one-to-many or many-to-one correspondence.

In some embodiments, the seventh mapping relationship is determined by the communication device from multiple mapping relationships.

Exemplarily, the multiple mapping relationships may be pre-configured, configured by the network device, or determined by the terminal device.

Exemplarily, the multiple mapping relationships may be determined by the terminal device, and further, the terminal device may transmit information indicating the multiple mapping relationships to the network device.

It should be noted that each of the multiple mapping relationships may be used to define the code unit length and/or the coding mode corresponding to each quantity group in the at least one quantity group, but in different mapping relationships, the correspondence between the quantity group and the code unit length is different, and/or the correspondence between the quantity group and the coding mode is different. Certainly, in other alternative embodiments, the mapping relationship may also be referred to as a mapping pattern.

In some embodiments, the seventh mapping relationship is determined from the multiple mapping relationships based on relevant information of a terminal device, and/or the seventh mapping relationship is determined from the multiple mapping relationships based on information indicated by a network device.

Exemplarily, the seventh mapping relationship is determined by a terminal device or a network device from the multiple mapping relationships based on relevant information of the terminal device. Further, the terminal device may report the relevant information of the terminal device to the network device.

Exemplarily, the relevant information of the terminal device includes, but is not limited to, an identity of the terminal device and/or a cell identity for the terminal device.

Exemplarily, the seventh mapping relationship may be obtained by the communication device processing the identity of the terminal device according to a preset rule. For example, the seventh mapping relationship may be obtained by the communication device calculating the relevant information of the terminal device according to a preset rule in a preset calculation mode. For example, the seventh mapping relationship may be obtained by the communication device performing modulo operation on the relevant information or part of the relevant information of the terminal device based on the number of the multiple mapping relationships.

Exemplarily, the seventh mapping relationship is a mapping relationship indicated by a network device.

With reference to FIG. 9 and FIG. 10, when the first number is C₁, the communication device may adaptively adjust the at least one coding mode to coding mode 1 based on the first number, and when the first number is C₂, the communication device may adaptively adjust the at least one coding mode to coding mode 2 based on the first number. Furthermore, in the examples illustrated in FIG. 9 and FIG. 10, when the same code unit length is used, since the coding mode 1 has a higher transmission rate, thus if C₁ > C₂, i.e. the first number is large, the communication device may adaptively adjust the first coding mode to a coding mode with a higher transmission rate based on the first number; when the first number is small, the communication device may adaptively adjust the first coding mode to a coding mode with a higher reliability based on the first number. Therefore, the reliability of data transmission or the data transmission rate can be adaptively improved, and the interference deletion processing can be facilitated at the receiving end, thereby improving the data transmission performance and the integrity of the data transmission.

With reference to FIG. 11 and FIG. 12, when the first number is C₁, the communication device may adaptively adjust the at least one code unit length to T₁ based on the first number, and when the first number is C₂, the communication device may adaptively adjust the at least one code unit length to T₂ based on the first number. Furthermore, in the examples illustrated in FIG. 9 and FIG. 10, when the same coding mode is used, since T₁ has a higher transmission rate, thus if C₁ < C₂, i.e. the first number is small, the communication device may adaptively adjust the first code unit length to a smaller code unit length based on the first number, which is beneficial to improving the data transmission rate; when the first number is large, the communication device may adaptively adjust the first code unit length to a larger code unit length based on the first number, which is beneficial to improving the reliability of data transmission. Therefore, the reliability of data transmission or the data transmission rate can be adaptively improved, and the interference deletion processing can be facilitated at the receiving end, thereby improving the data transmission performance and the integrity of the data transmission.

In some embodiments, the operation at S220 may include following operations.

A first time-frequency domain position of the first time-frequency domain resource is determined.

The at least one code unit length and/or the at least one coding mode are determined based on at least one time-frequency domain resource subset corresponding to the first time-frequency domain position.

In the embodiment, the communication device may determine the at least one code unit length and/or the at least one coding mode based on at least one time-frequency domain resource subset corresponding to the first time-frequency domain position. That is, the at least one code unit length and/or the at least one coding mode are associated with the first time-frequency domain position, i.e., the communication device may adaptively adjust the at least one code unit length and/or the at least one coding mode based on the first time-frequency domain position, and further adaptively improve the reliability of data transmission or the data transmission rate based on the first time-frequency domain position, which is beneficial to improving data transmission performance.

For example, when the channel condition is poor, the at least one code unit length is adaptively adjusted to a larger code unit length and/or the at least one coding mode is adaptively adjusted to a coding mode with a higher reliability through the first time-frequency domain position, so as to improve the reliability of data transmission. When the channel condition is good, the at least one code unit length is adaptively adjusted to a smaller code unit length and/or the at least one coding mode is adaptively adjusted to a coding mode with a higher transmission rate through the first time-frequency domain position, so as to improve the data transmission rate. That is, when the communication device adaptively adjusts the at least one code unit length and/or the at least one coding mode based on the first time-frequency domain position, the reliability of data transmission or the data transmission rate can be adaptively improved, and the interference deletion processing can be facilitated at the receiving end, thereby improving the data transmission performance and the integrity of the data transmission.

For another example, when the channel condition is poor, the at least one code unit length is adaptively adjusted to a larger code unit length and/or the at least one coding mode is adaptively adjusted to a coding mode with a higher transmission rate through the first time-frequency domain position, so as to further improve the data transmission rate. When the channel condition is good, the at least one code unit length is adaptively adjusted to a larger code unit length and/or the at least one coding mode is adaptively adjusted to a coding mode with a higher reliability through the first time-frequency domain position, so as to further improve the reliability of data transmission. That is, when the communication device adaptively adjusts the at least one code unit length and/or the at least one coding mode based on the first time-frequency domain position, the reliability of data transmission or the data transmission rate can be adaptively improved, and the interference deletion processing can be facilitated at the receiving end, thereby improving the data transmission performance and the integrity of the data transmission.

As an example, the terminal device may determine the first time-frequency domain position according to a pre-configured first time-frequency domain resource or a first time-frequency domain resource scheduled by the network device, and determine the at least one code unit length and/or the at least one coding mode based on at least one time-frequency domain resource subset corresponding to the first time-frequency domain position. Since the first time-frequency domain resource is scheduled by the network device or pre-configured, the understanding of the network device for the first time-frequency domain resource can be consistent with that of the terminal device. Based on this, the network device may also determine, based on at least one time-frequency domain resource subset corresponding to the first time-frequency domain position, the at least one code unit length and/or the at least one coding mode.

It should be noted that the specific implementation of the time-frequency domain resource subset is not limited in the present disclosure.

As an example, the unit of the time-frequency domain resource subset may be a resource unit, and the resource unit may be a physical resource block or a resource block, or a minimum unit used for back scattering. The resource unit acts as a minimum time-frequency resource unit for the zero-power back communication. Back scattering may use a resource unit group including multiple resource units for communication.

In some embodiments, the operation at S220 may include following operation.

At least one code unit length corresponding to the at least one time-frequency domain resource subset is determined based on an eighth mapping relationship.

The at least one code unit length used for the first data is determined according to the at least one code unit length corresponding to the at least one time-frequency domain resource subset, and the eighth mapping relationship includes a correspondence between each time-frequency domain resource subset in a first time-frequency domain resource set and at least one code unit length corresponding to the time-frequency domain resource subset, and the first time-frequency domain resource set includes the at least one time-frequency domain resource subset.

As an example, the communication device may determine at least one code unit length corresponding to the at least one time-frequency domain resource subset based on the eighth mapping relationship, and determine the at least one code unit length used for the first data based on the at least one code unit length corresponding to the at least one time-frequency domain resource subset. For example, when the at least one code unit length corresponding to the at least one time-frequency domain resource subset is one code unit length, the communication device may determine the one code unit length as the at least one code unit length used for the first data. For another example, when the at least one code unit length corresponding to the at least one time-frequency domain resource subset is multiple code unit lengths, the communication device may determine the multiple code unit lengths as the at least one code unit length, or determine part of the multiple code unit lengths as the at least one code unit length.

In some embodiments, two adjacent time-frequency domain resource subsets in the first time-frequency domain resource set are continuous, or there is an interval between the two time-frequency domain resource subsets, or the two time-frequency domain resource subsets have overlapping resources.

Exemplarily, the two adjacent time-frequency domain resource subsets may be each pair of two adjacent time-frequency domain resource subsets in the first time-frequency domain resource set.

Exemplarily, the two adjacent time-frequency domain resource subsets may be a pair of two adjacent time-frequency domain resource subsets in the first time-frequency domain resource set.

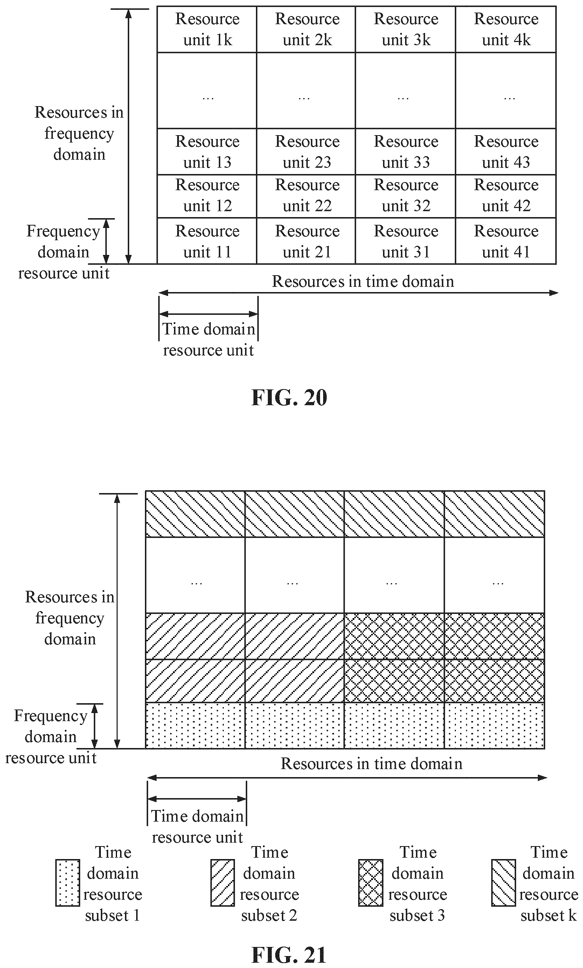

FIG. 20 is a schematic diagram of a first time-frequency domain resource set provided by an embodiment of the present disclosure.

As illustrated in FIG. 20, the first time domain resource subset includes four time domain resource units in time domain and k frequency domain resource units in frequency domain. If a width of a resource unit in frequency domain is the width of the frequency domain resource unit and a length of the resource unit in time domain is the length of the time domain resource unit, the first time-frequency domain resource set may include 4k resource units.

FIG. 21 is a schematic diagram of at least one time domain resource subset obtained based on the first time-frequency domain resource subset illustrated in FIG. 20.

As illustrated in FIG. 21, the first time-frequency domain resource set (i.e. the 4k resource units included in the set) illustrated in FIG. 20 may be divided to obtain at least one time-frequency domain resource subset. For example, the 4k resource units may be divided into k time-frequency domain resource subsets, where each pair of two adjacent time-frequency domain resource subsets in the k time-frequency domain resource subsets is continuous. For example, the time-frequency domain resource subset 1 in the k time-frequency domain resource subsets may include resource units 11, 21, 31 and 41, the time-frequency domain resource subset 2 in the k time-frequency domain resource subsets may include resource units 12, 22, 13 and 23, the time-frequency domain resource subset 3 in the k time-frequency domain resource subsets may include resource units 32, 42, 33 and 43, and so on, the time-frequency domain resource subset k in the k time-frequency domain resource subsets may include resource units 1k, 2k, 3k and 4k.

FIG. 20 and FIG. 21 are merely examples of the present disclosure and should not be construed as limitation of the present disclosure.

For example, in other alternative embodiments, the first time-frequency domain resource subset may further include another number of time-frequency domain resource units in time domain. For another example, in other alternative embodiments, the 4k resource units may also be divided into another number of time-frequency domain resource subsets, which is not specifically limited in the present disclosure.

In some embodiments, different time-frequency domain resource subsets in the first time-frequency domain resource set include different numbers of resource units, or part or all of time-frequency domain resource subsets in the first time-frequency domain resource set include a same number of resource units.

Exemplarily, assuming that the first time-frequency domain resource set includes 4k resource units, the 4k resource units may be divided. For example, the 4k resource units may be divided into k time-frequency domain resource subsets, and the number of resource units included in part or all of the k time-frequency domain resource subsets may be different from each other or the same. For example, as illustrated in FIG. 21, all of the k time-frequency domain resource subsets include the same number of resource units, i.e. each time-frequency domain resource subset includes four resource units.

In some embodiments, a length of the first time-frequency domain resource set in time domain is an integral multiple of a time unit, and/or a width of the first time-frequency domain resource set in time-frequency domain is an integral multiple of a time-frequency domain resource unit.

As an example, the time-domain length of each of the at least one time-frequency domain resource subset is an integral multiple of a time unit or a time domain resource unit.

As an example, the frequency-domain width of each of the at least one time-frequency domain resource subset is an integral multiple of a frequency domain resource unit.

In some embodiments, different time-frequency domain resource subsets in the first time-frequency domain resource set correspond to different coding modes and/or different code unit lengths, or part of time-frequency domain resource subsets in the first time-frequency domain resource set correspond to a same coding mode and/or a same code unit length.

Exemplarily, code unit lengths and time-frequency domain resource subsets in the first time-frequency domain resource set may be in one-to-one correspondence, and may also be in one-to-many or many-to-one correspondence.

Exemplarily, the code unit lengths and time-frequency domain resource subsets in the first time-frequency domain resource set may be in one-to-one correspondence, and may also be in one-to-many or many-to-one correspondence.

In some embodiments, the at least one time-frequency domain resource subset includes at least one of: a time-frequency domain resource subset included in the first time-frequency domain position, or a time-frequency domain resource subset partially overlapped with the first time-frequency domain position.

Exemplarily, the at least one time-frequency domain resource subset includes a time-frequency domain resource subset, in the first time-frequency domain resource set, that completely or partially overlaps with the first time-frequency domain position.

In some embodiments, the at least one code unit length is at least one code unit length corresponding to the at least one time-frequency domain resource subset. The method 200 may further include following operations.

The first data is transmitted by using a code unit length corresponding to a first time-frequency domain resource subset in the at least one time-frequency domain resource subset at a position, in the first time-frequency domain position, that partially or completely overlaps with the first time-frequency domain resource subset; and/or, the first data is transmitted by using a preset code unit length at a position, in the first time-frequency domain position, that does not overlap with the at least one time-frequency domain resource subset.

As an example, the preset code unit length includes, but is not limited to, at least one of: a code unit length corresponding to an i-th time-frequency domain resource subset in time domain and/or frequency domain in the at least one time-frequency domain resource subset, or a pre-configured code unit length. As an example, the i-th time-frequency domain resource subset may be the first time-frequency domain resource subset in the at least one time-frequency domain resource subset, the last time-frequency domain resource subset in the at least one time-frequency domain resource subset, or any time-frequency domain resource subset between the first time-frequency domain resource subset and the last time-frequency domain resource subset in the at least one time-frequency domain resource subset. Exemplarily, i is pre-configured, determined by the terminal device, or determined based on information indicated by the network device.

As an example, when two adjacent time-frequency domain resource subsets in the first time-frequency domain resource set are continuous, the first data is transmitted by using a code unit length corresponding to a first time-frequency domain resource subset in the at least one time-frequency domain resource subset at a position, in the first time-frequency domain position, that partially or completely overlaps with the first time-frequency domain resource subset.

As an example, when there is an interval between two adjacent time-frequency domain resource subsets in the first time-frequency domain resource set and there is no interval between time-frequency domain resource subsets included in the first time-frequency domain position, the first data is transmitted by using a code unit length corresponding to a first time-frequency domain resource subset in the at least one time-frequency domain resource subset at a position in the first time-frequency domain position that partially or completely overlaps with the first time-frequency domain resource subset.

As an example, when there is an interval between two adjacent time-frequency domain resource subsets in the first time-frequency domain resource set and there is an interval between time-frequency domain resource subsets included in the first time-frequency domain position, the first data is transmitted by using a code unit length corresponding to a first time-frequency domain resource subset in the at least one time-frequency domain resource subset at a position in the first time-frequency domain position that partially or completely overlaps with the first time-frequency domain resource subset, and the first data is transmitted by using a preset code unit length at a position in the first time-frequency domain position that does not overlap with the at least one time-frequency domain resource subset.

As an example, when the first time-frequency domain position does not overlap with the at least one time-frequency domain resource subset, the first data is transmitted by using a preset code unit length at a position, in the first time-frequency domain position, that does not overlap with the at least one time-frequency domain resource subset.

In some embodiments, the at least one code unit length is a code unit length corresponding to a second time-frequency domain resource subset in the at least one time-frequency domain resource subset. The method 200 may further include following operation.

The first data is transmitted by using the code unit length corresponding to the second time-frequency domain resource subset at the first time-frequency domain position.

Exemplarily, the second time-frequency domain resource subset includes, but is not limited to, the j-th time-frequency domain resource subset in the time domain and/or frequency domain of the at least one time-frequency domain resource subset. As an example, the j-th time-frequency domain resource subset may be the first one time-frequency domain resource subset in the at least one time-frequency domain resource subset, the last time-frequency domain resource subset in the at least one time-frequency domain resource subset, or any time-frequency domain resource subset between the first one time-frequency domain resource subset and the last time-frequency domain resource subset in the at least one time-frequency domain resource subset. Exemplarily, j is pre-configured, determined by the terminal device, or determined based on information indicated by the network device.

In some embodiments, the eighth mapping relationship is determined by the communication device from multiple mapping relationships.

Exemplarily, the multiple mapping relationships may be pre-configured, configured by the network device, or determined by the terminal device.

Exemplarily, the multiple mapping relationships may be determined by the terminal device, and further, the terminal device may transmit information indicating the multiple mapping relationships to the network device.

It should be noted that each of the multiple mapping relationships may be used to define the code unit length corresponding to each time-frequency domain resource subset in the first time-frequency domain resource set, but in different mapping relationships, the correspondence between time-frequency domain resource subsets and code unit lengths is different. Certainly, in other alternative embodiments, the mapping relationship may also be referred to as a mapping pattern.

In some embodiments, the eighth mapping relationship is determined from the multiple mapping relationships based on relevant information of a terminal device, and/or the eighth mapping relationship is determined from the multiple mapping relationships based on information indicated by a network device.

Exemplarily, the eighth mapping relationship is determined by a terminal device or a network device from the multiple mapping relationships based on relevant information of the terminal device. Further, the terminal device may report the relevant information of the terminal device to the network device.

Exemplarily, the relevant information of the terminal device includes, but is not limited to, an identity of the terminal device and/or a cell identity for the terminal device.

Exemplarily, the eighth mapping relationship may be obtained by the communication device processing the identity of the terminal device according to a preset rule. For example, the eighth mapping relationship may be obtained by the communication device calculating the relevant information of the terminal device according to a preset rule in a preset calculation mode. For example, the eighth mapping relationship may be obtained by the communication device performing modulo operation on the relevant information or part of the relevant information of the terminal device based on the number of the multiple mapping relationships.

Exemplarily, the eighth mapping relationship is a mapping relationship indicated by a network device.

In some embodiments, the operation at S220 may include following operation.

At least one coding mode corresponding to the at least one time-frequency domain resource subset is determined based on the ninth mapping relationship. The at least one coding mode used for the first data is determined according to the at least one coding mode corresponding to the at least one time-frequency domain resource subset, and the ninth mapping relationship includes a correspondence between each time-frequency domain resource subset in a first time-frequency domain resource set and at least one coding mode corresponding to the time-frequency domain resource subset, and the first time-frequency domain resource set includes the at least one time-frequency domain resource subset.

As an example, the communication device may determine at least one coding mode corresponding to the at least one time-frequency domain resource subset based on the ninth mapping relationship, and determine the at least one coding mode used for the first data based on the at least one coding mode corresponding to the at least one time-frequency domain resource subset. For example, when the at least one coding mode corresponding to the at least one time-frequency domain resource subset is one coding mode, the communication device may determine the one coding mode as the at least one coding mode. For another example, when the at least one coding mode corresponding to the at least one time-frequency domain resource subset is multiple coding modes, the communication device may determine the multiple coding modes as the at least one coding mode, or determine part of the multiple coding modes as the at least one coding mode.

It should be understood that the description of the first time-frequency domain resource set and at least one time-frequency domain resource subset in the embodiment may refer to the relevant description in the eighth mapping relationship mentioned above, and will not be repeated herein to avoid repetition. Furthermore, it should be understood that the eighth mapping relationship and the ninth mapping relationship in the present disclosure may be regarded as two independent mapping relationships or may be combined into one mapping relationship, which is not specifically limited in the present disclosure. For example, when the eighth mapping relationship and the ninth mapping relationship are combined into one mapping relationship, the one mapping relationship may include a correspondence between each time-frequency domain resource subset in the first time-frequency domain resource set and at least one coding mode and/or at least one code unit length corresponding to the time-frequency domain resource subset.

In some embodiments, the at least one coding mode is the at least one coding mode corresponding to the at least one time-frequency domain resource subset. The method 200 may further include following operations.

The first data is transmitted by using a coding mode corresponding to a first time-frequency domain resource subset in the at least one time-frequency domain resource subset at a position in the first time-frequency domain position that partially or completely overlaps with the first time-frequency domain resource subset; and/or, the first data is transmitted by using a preset coding mode at a position in the first time-frequency domain position that does not overlap with the at least one time-frequency domain resource subset.

As an example, the preset coding mode includes, but is not limited to, at least one of: a coding mode corresponding to the i-th time-frequency domain resource subset in time domain and/or frequency domain in the at least one time-frequency domain resource subset, or a pre-configured coding mode. As an example, the i-th time-frequency domain resource subset may be the first time-frequency domain resource subset in the at least one time-frequency domain resource subset, the last time-frequency domain resource subset in the at least one time-frequency domain resource subset, or any time-frequency domain resource subset between the first time-frequency domain resource subset and the last time-frequency domain resource subset in the at least one time-frequency domain resource subset. Exemplarily, i is pre-configured, determined by the terminal device, or determined based on information indicated by the network device.

As an example, when two adjacent time-frequency domain resource subsets in the first time-frequency domain resource set are continuous, the first data is transmitted by using a coding mode corresponding to a first time-frequency domain resource subset in the at least one time-frequency domain resource subset at a position, in the first time-frequency domain position, that partially or completely overlaps with the first time-frequency domain resource subset.

As an example, when there is an interval between two adjacent time-frequency domain resource subsets in the first time-frequency domain resource set and there is no interval between time-frequency domain resource subsets included in the first time-frequency domain position, the first data is transmitted by using a coding mode corresponding to a first time-frequency domain resource subset in the at least one time-frequency domain resource subset at a position, in the first time-frequency domain position, that partially or completely overlaps with the first time-frequency domain resource subset.

As an example, when there is an interval between two adjacent time-frequency domain resource subsets in the first time-frequency domain resource set and there is an interval between time-frequency domain resource subsets included in the first time-frequency domain position, the first data is transmitted by using a coding mode corresponding to a first time-frequency domain resource subset in the at least one time-frequency domain resource subset at a position in the first time-frequency domain position that partially or completely overlaps with the first time-frequency domain resource subset, and the first data is transmitted by using a preset coding mode at a position in the first time-frequency domain position that does not overlap with the at least one time-frequency domain resource subset.

As an example, when the first time-frequency domain position does not overlap with the at least one time-frequency domain resource subset, the first data is transmitted by using a preset coding mode at a position in the first time-frequency domain position that does not overlap with the at least one time-frequency domain resource subset.

In some embodiments, the at least one coding mode is a coding mode corresponding to a second time-frequency domain resource subset in the at least one time-frequency domain resource subset. The method 200 may further include following operation.

The first data is transmitted by using the coding mode corresponding to the second time-frequency domain resource subset at the first time-frequency domain position.

Exemplarily, the second time-frequency domain resource subset includes, but is not limited to, the j-th time-frequency domain resource subset in time domain and/or frequency domain of the at least one time-frequency domain resource subset. As an example, the j-th time-frequency domain resource subset may be the first time-frequency domain resource subset in the at least one time-frequency domain resource subset, the last time-frequency domain resource subset in the at least one time-frequency domain resource subset, or any time-frequency domain resource subset between the first time-frequency domain resource subset and the last time-frequency domain resource subset in the at least one time-frequency domain resource subset. Exemplarily, j is pre-configured, determined by the terminal device, or determined based on information indicated by the network device.

It should be understood that the solution in which the communication device determines the at least one coding mode based on the ninth mapping relationship may refer to the solution in which the communication device determines the at least one code unit length based on the eighth mapping relationship, which will not be repeated herein to avoid repetition.

In some embodiments, the ninth mapping relationship is determined by the communication device from multiple mapping relationships.

Exemplarily, the multiple mapping relationships may be pre-configured, configured by the network device, or determined by the terminal device.

Exemplarily, the multiple mapping relationships may be determined by the terminal device, and further, the terminal device may transmit information indicating the multiple mapping relationships to the network device.

It should be noted that each of the multiple mapping relationships may be used to define the code unit length and/or the coding mode corresponding to each width group in the at least one width group, but in different mapping relationships, the correspondence between the width group and the code unit length is different, and/or the correspondence between the width group and the coding mode is different. Certainly, in other alternative embodiments, the mapping relationship may also be referred to as a mapping pattern.

In some embodiments, the ninth mapping relationship is determined from the multiple mapping relationships based on relevant information of a terminal device, and/or the ninth mapping relationship is determined from the multiple mapping relationships based on information indicated by a network device.

Exemplarily, the ninth mapping relationship is determined by a terminal device or a network device from the multiple mapping relationships based on relevant information of the terminal device. Further, the terminal device may report the relevant information of the terminal device to the network device.

Exemplarily, the relevant information of the terminal device includes, but is not limited to, an identity of the terminal device and/or a cell identity for the terminal device.

Exemplarily, the ninth mapping relationship may be obtained by the communication device processing the identity of the terminal device according to a preset rule. For example, the ninth mapping relationship may be obtained by the communication device calculating the relevant information of the terminal device according to a preset rule in a preset calculation mode. For example, the ninth mapping relationship may be obtained by the communication device performing modulo operation on the relevant information or part of the relevant information of the terminal device based on the number of the multiple mapping relationships.

Exemplarily, the ninth mapping relationship is a mapping relationship indicated by a network device.

In other alternative embodiments, the network device may also decode the first bitstream in a manner of blind detection by using multiple code unit lengths and/or multiple coding modes to obtain the first data. For example, the network device may also decode the first bitstream in a traversal manner by using multiple code unit lengths and/or multiple coding modes, and use the verified decoded data as the decoded first data. In an example, the multiple code unit lengths are determined according to preconfigured information, and/or the multiple coding modes are determined according to the preconfigured information.

Preferred implementations of the disclosure have been described in detail with reference to the drawings. However, the disclosure is not limited to specific details of the above implementations. Within the scope of the technical concept of the disclosure, various simple modifications may be made to the technical solutions of the disclosure, and all these simple modifications belong to the scope of protection of the disclosure. For example, specific technical features described in the above specific implementations may be combined in any suitable way without conflict. In order to avoid unnecessary repetition, various possible combination modes will not be described in the disclosure. For another example, various different implementations according to the disclosure may be combined arbitrarily as long as the combination does not go against the concept of the disclosure, and the combination should also be deemed falling in the scope of the disclosure.

It should also be understood that in various method embodiments of the disclosure, a magnitude of a sequence number of each process does not mean an execution sequence and the execution sequence of each process should be determined by its function and an internal logic and should not form any limit to an implementation process of the embodiments of the disclosure.

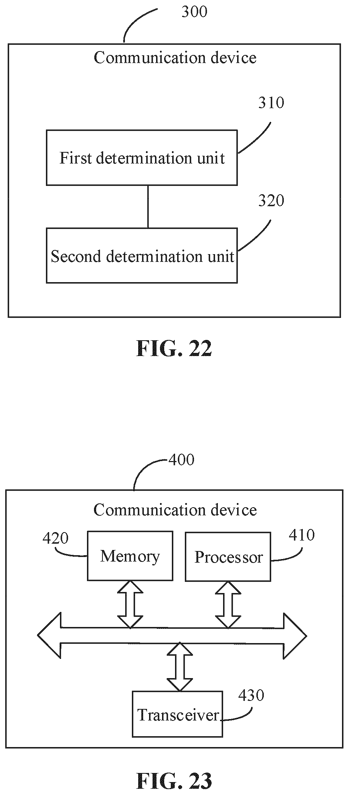

The method embodiments of the present disclosure are described in detail above with reference to FIG. 1 to FIG. 21, and the apparatus embodiments of the present disclosure are described in detail below with reference to FIG. 22 to FIG. 24.

FIG. 22 is a schematic block diagram of a communication device 300 according to an embodiment of the present disclosure.

As illustrated in FIG. 22, the communication device 300 may include a first determination unit 310 and a second determination unit 320.

The first determination unit 310 is configured to determine a first time-frequency domain resource used for first data.

The second determination unit 320 is configured to determine, based on the first time-frequency domain resource, at least one code unit length used for the first data and/or at least one coding mode used for the first data.

In some embodiments, the second determination unit 320 may be specifically configured to determine a first length of the first time-frequency domain resource in time domain, determine a first length group to which the first length belongs, and determine, based on a first mapping relationship, at least one code unit length corresponding to the first length group as the at least one code unit length, and/or at least one coding mode corresponding to the first length group as the at least one coding mode.

The first mapping relationship includes a correspondence between each length group in at least one length group and at least one code unit length and/or at least one coding mode corresponding to the length group, and the at least one length group includes the first length group.

In some embodiments, the at least one length group includes: a group obtained by dividing time domain resources of a preset length, or a group obtained by dividing at least one time domain resource length.

In some embodiments, each of the at least one time domain resource length is an integral multiple of a time unit. The second determination unit 320 may be specifically configured to: when the first length is not an integral multiple of the time unit, round down or up the first length to obtain a second length, and determine the group to which the second length belongs as the first length group.

In some embodiments, different length groups in the at least one length group correspond to different coding modes and/or different code unit lengths, or part of the at least one length group correspond to a same coding mode and/or a same code unit length.

In some embodiments, the first mapping relationship is determined by the communication device from multiple mapping relationships.

In some embodiments, the first mapping relationship is determined from the multiple mapping relationships based on relevant information of a terminal device, and/or the first mapping relationship is determined from the multiple mapping relationships based on information indicated by a network device.

In some embodiments, the second determination unit 320 may be specifically configured to determine a first time-domain position of the first time-frequency domain resource in time domain, and determine the at least one code unit length and/or the at least one coding mode based on at least one time domain resource subset corresponding to the first time-domain position.

In some embodiments, the operation that the at least one code unit length and/or the at least one coding mode are determined based on at least one time domain resource subset corresponding to the first time-domain position is performed as follows.

At least one code unit length corresponding to the at least one time domain resource subset is determined based on a second mapping relationship.

The at least one code unit length is determined according to the at least one code unit length corresponding to the at least one time domain resource subset, and the second mapping relationship includes a correspondence between each time domain resource subset in a first time domain resource set and at least one code unit length corresponding to the time domain resource subset, and the first time domain resource set includes the at least one time domain resource subset.

In some embodiments, the at least one code unit length is the at least one code unit length corresponding to the at least one time domain resource subset. The second determination unit 320 may also be configured to: transmit the first data by using a code unit length corresponding to a first time domain resource subset in the at least one time domain resource subset at a position in the first time-domain position that partially or completely overlaps with the first time domain resource subset; and/or, transmit the first data by using a preset code unit length at a position in the first time-domain position that does not overlap with the at least one time domain resource subset.

In some embodiments, the at least one code unit length is a code unit length corresponding to a second time domain resource subset in the at least one time domain resource subset. The second determination unit 320 may also be configured to transmit the first data by using the code unit length corresponding to the second time domain resource subset at the first time-domain position.

In some embodiments, the second mapping relationship is determined by the communication device from multiple mapping relationships.

In some embodiments, the second mapping relationship is determined from the multiple mapping relationships based on relevant information of a terminal device, and/or the second mapping relationship is determined from the multiple mapping relationships based on information indicated by a network device.

In some embodiments, the second determination unit 320 may be specifically configured to determine at least one coding mode corresponding to the at least one time domain resource subset based on a third mapping relationship.

The at least one coding mode is determined according to the at least one coding mode corresponding to the at least one time domain resource subset, and the third mapping relationship includes a correspondence between each time domain resource subset in a first time domain resource set and at least one coding mode corresponding to the time domain resource subset, and the first time domain resource set includes the at least one time domain resource subset.

In some embodiments, the at least one coding mode is the at least one coding mode corresponding to the at least one time domain resource subset. The second determination unit 320 may also be configured to: transmit the first data by using a coding mode corresponding to a first time domain resource subset in the at least one time domain resource subset at a position in the first time-domain position that partially or completely overlaps with the first time domain resource subset; and/or, transmit the first data by using a preset coding mode at a position in the first time-domain position that does not overlap with the at least one time domain resource subset.

In some embodiments, the at least one coding mode is a coding mode corresponding to a second time domain resource subset in the at least one time domain resource subset. The second determination unit 320 may also be configured to transmit the first data by using the coding mode corresponding to the second time domain resource subset at the first time-domain position.

In some embodiments, the third mapping relationship is determined by the communication device from multiple mapping relationships.

In some embodiments, the third mapping relationship is determined from the multiple mapping relationships based on relevant information of a terminal device, and/or the third mapping relationship is determined from the multiple mapping relationships based on information indicated by a network device.

In some embodiments, two adjacent time domain resource subsets in the first time domain resource set are continuous, or there is an interval between the two time domain resource subsets, or the two time domain resource subsets have an overlapping resource.

In some embodiments, different time domain resource subsets in the first time domain resource set have different time domain lengths, or part or all of time domain resource subsets in the first time domain resource set have a same time domain length.

In some embodiments, the time domain length of the first time domain resource set is an integral multiple of a time unit.

In some embodiments, different time domain resource subsets in the first time domain resource set correspond to different coding modes and/or different code unit lengths, or part of time domain resource subsets in the first time domain resource set correspond to a same coding mode and/or a same code unit length.

In some embodiments, the at least one time domain resource subset includes at least one of: a time domain resource subset included in the first time-domain position, or a time domain resource subset partially overlapped with the first time-domain position.

In some embodiments, the second determination unit 320 may be specifically configured to determine a first width of the first time-frequency domain resource in frequency domain, determine a first width group to which the first width belongs, and determine, based on a fourth mapping relationship, at least one first code unit length corresponding to the first width group as the at least one code unit length and/or at least one first coding mode corresponding to the first width group as the at least one coding mode.

The fourth mapping relationship includes a correspondence between each width group in at least one width group and at least one code unit length and/or at least one coding mode corresponding to the width group, and the at least one width group includes the first width group.

In some embodiments, the at least one width group includes: a group obtained by dividing a frequency domain resource of a preset width, or a group obtained by dividing at least one frequency domain resource width.

In some embodiments, each of the at least one frequency domain resource width is an integral multiple of a frequency domain resource unit. The second determination unit 320 may be specifically configured to: when the first width is not an integral multiple of the frequency domain resource unit, round up or down the first width to obtain a second width; and determine a group to which the second width belongs as the first width group.

In some embodiments, different width groups in the at least one width group correspond to different coding modes and/or different code unit lengths, or part of the at least one width group correspond to a same coding mode and/or a same code unit length.

In some embodiments, the fourth mapping relationship is determined by the communication device from multiple mapping relationships.

In some embodiments, the fourth mapping relationship is determined from the multiple mapping relationships based on relevant information of a terminal device, and/or the fourth mapping relationship is determined from the multiple mapping relationships based on information indicated by a network device.

In some embodiments, the second determination unit 320 may be specifically configured to determine a first frequency-domain position of the first time-frequency domain resource in frequency domain, and determine the at least one code unit length and/or the at least one coding mode based on at least one frequency domain resource subset corresponding to the first frequency-domain position.

In some embodiments, the second determination unit 320 may be specifically configured to determine at least one code unit length corresponding to the at least one frequency domain resource subset based on a fifth mapping relationship.

The at least one code unit length is determined according to the at least one code unit length corresponding to the at least one frequency domain resource subset, and the fifth mapping relationship includes a correspondence between each frequency domain resource subset in a first frequency domain resource set and at least one code unit length corresponding to the frequency domain resource subset, and the first frequency domain resource set includes the at least one frequency domain resource subset.

In some embodiments, the at least one code unit length is the at least one code unit length corresponding to the at least one frequency domain resource subset. The second determination unit 320 may also be configured to: transmit the first data by using a code unit length corresponding to a first frequency domain resource subset in the at least one frequency domain resource subset at a position, in the first frequency-domain position, that partially or completely overlaps with the first frequency domain resource subset; and/or, transmit the first data by using a preset code unit length at a position, in the first frequency-domain position, that does not overlap with the at least one frequency domain resource subset.

In some embodiments, the at least one code unit length is a code unit length corresponding to a second frequency domain resource subset in the at least one frequency domain resource subset. The second determination unit 320 may also be configured to transmit the first data by using the code unit length corresponding to the second frequency domain resource subset at the first frequency-domain position.

In some embodiments, the fifth mapping relationship is determined by the communication device from multiple mapping relationships.

In some embodiments, the fifth mapping relationship is determined from the multiple mapping relationships based on relevant information of a terminal device, and/or the fifth mapping relationship is determined from the multiple mapping relationships based on information indicated by a network device.

In some embodiments, the second determination unit 320 may be specifically configured to determine at least one coding mode corresponding to the at least one frequency domain resource subset based on the sixth mapping relationship.

The at least one coding mode is determined according to the at least one coding mode corresponding to the at least one frequency domain resource subset, and the sixth mapping relationship includes a correspondence between each frequency domain resource subset in a first frequency domain resource set and at least one coding mode corresponding to the frequency domain resource subset, and the first frequency domain resource set includes the at least one frequency domain resource subset.

In some embodiments, the at least one coding mode is the at least one coding mode corresponding to the at least one frequency domain resource subset. The second determination unit 320 may also be configured to: transmit the first data by using a coding mode corresponding to a first frequency domain resource subset in the at least one frequency domain resource subset at a position in the first frequency-domain position that partially or completely overlaps with the first frequency domain resource subset; and/or, transmit the first data by using a preset coding mode at a position in the first frequency-domain position that does not overlap with the at least one frequency domain resource subset.

In some embodiments, the at least one coding mode is a coding mode corresponding to a second frequency domain resource subset in the at least one frequency domain resource subset. The second determination unit 320 may also be configured to transmit the first data by using the coding mode corresponding to the second frequency domain resource subset at the first frequency-domain position.

In some embodiments, the sixth mapping relationship is determined by the communication device from multiple mapping relationships.

In some embodiments, the sixth mapping relationship is determined from the multiple mapping relationships based on relevant information of a terminal device, and/or the sixth mapping relationship is determined from the multiple mapping relationships based on information indicated by a network device.

In some embodiments, two adjacent frequency domain resource subsets in the first frequency domain resource set are continuous, or there is an interval between the two frequency domain resource subsets, or the two frequency domain resource subsets have an overlapping resource.

In some embodiments, different frequency domain resource subsets in the first frequency domain resource set have different frequency domain widths, or part or all of frequency domain resource subsets in the first frequency domain resource set have a same frequency domain width.

In some embodiments, a frequency domain width of the first frequency domain resource set is an integral multiple of a frequency domain resource unit.

In some embodiments, different frequency domain resource subsets in the first frequency domain resource set correspond to different coding modes and/or different code unit lengths, or part of frequency domain resource subsets in the first frequency domain resource set correspond to a same coding mode and/or a same code unit length.

In some embodiments, the at least one frequency domain resource subset includes at least one of: a frequency domain resource subset included in the first frequency-domain position, or a frequency domain resource subset partially overlapped with the first frequency-domain position.

In some embodiments, the second determination unit 320 may be specifically configured to determine a first number of resource units included in the first time-frequency domain resource, determine a first quantity group to which the first number belongs, and determine, based on the seventh mapping relationship, at least one code unit length corresponding to the first quantity group as the at least one code unit length and/or at least one coding mode corresponding to the first quantity group as the at least one coding mode.

The seventh mapping relationship includes a correspondence between each quantity group in at least one quantity group and at least one code unit length and/or at least one coding mode corresponding to the quantity group, and the at least one quantity group includes the first quantity group.

In some embodiments, the at least one quantity group includes: a group obtained by dividing a preset number of resource units, or a group obtained by dividing at least one resource unit number.

In some embodiments, each of the at least one resource unit number is an integral multiple of a resource unit. The second determination unit 320 may be specifically configured to: when the first number is not an integral multiple of the resource unit, round up or down the first number to obtain a second number; and determine a group to which the second number belongs as the first quantity group.

In some embodiments, different quantity groups in the at least one quantity group correspond to different coding modes and/or different code unit lengths, or part of the at least one quantity group correspond to a same coding mode and/or a same code unit length.

In some embodiments, the seventh mapping relationship is determined by the communication device from multiple mapping relationships.

In some embodiments, the seventh mapping relationship is determined from the multiple mapping relationships based on relevant information of a terminal device, and/or the seventh mapping relationship is determined from the multiple mapping relationships based on information indicated by a network device.

In some embodiments, the second determination unit 320 may be specifically configured to determine a first time-frequency domain position of the first time-frequency domain resource, and determine the at least one code unit length and/or the at least one coding mode based on at least one time-frequency domain resource subset corresponding to the first time-frequency domain position.

In some embodiments, the second determination unit 320 may be specifically configured to determine at least one code unit length corresponding to the at least one time-frequency domain resource subset based on an eighth mapping relationship.

The at least one code unit length is determined according to the at least one code unit length corresponding to the at least one time-frequency domain resource subset, and the eighth mapping relationship includes a correspondence between each time-frequency domain resource subset in a first time-frequency domain resource set and at least one code unit length corresponding to the time-frequency domain resource subset, and the first time-frequency domain resource set includes the at least one time-frequency domain resource subset.

In some embodiments, the at least one code unit length is the at least one code unit length corresponding to the at least one time-frequency domain resource subset. The second determination unit 320 may also be configured to: transmit the first data by using a code unit length corresponding to a first time-frequency domain resource subset at a position, in the first time-frequency domain position, that partially or completely overlaps with the first time-frequency domain resource subset in the at least one time-frequency domain resource subset; and/or, transmit the first data by using a preset code unit length at a position, in the first time-frequency domain, that does not overlap with the at least one time-frequency domain resource subset.

In some embodiments, the at least one code unit length is a code unit length corresponding to a second time-frequency domain resource subset in the at least one time-frequency domain resource subset. The second determination unit 320 may also be configured to transmit the first data by using the code unit length corresponding to the second time-frequency domain resource subset at the first time-frequency domain position.

In some embodiments, the eighth mapping relationship is determined by the communication device from multiple mapping relationships.

In some embodiments, the eighth mapping relationship is determined from the multiple mapping relationships based on relevant information of a terminal device, and/or the eighth mapping relationship is determined from the multiple mapping relationships based on information indicated by a network device.

In some embodiments, the second determination unit 320 may be specifically configured to determine at least one coding mode corresponding to the at least one time-frequency domain resource subset based on the ninth mapping relationship.

The at least one coding mode is determined according to the at least one coding mode corresponding to the at least one time-frequency domain resource subset, and the ninth mapping relationship includes a correspondence between each time-frequency domain resource subset in a first time-frequency domain resource set and at least one coding mode corresponding to the time-frequency domain resource subset, and the first time-frequency domain resource set includes the at least one time-frequency domain resource subset.

In some embodiments, the at least one coding mode is the at least one coding mode corresponding to the at least one time-frequency domain resource subset. The second determination unit 320 may also be configured to: transmit the first data by using a coding mode corresponding to a first time-frequency domain resource subset in the at least one time-frequency domain resource subset at a position, in the first time-frequency domain position, that partially or completely overlaps with the first time-frequency domain resource subset; and/or, transmit the first data by using a preset coding mode at a position, in the first time-frequency domain position, that does not overlap with the at least one time-frequency domain resource subset.

In some embodiments, the at least one coding mode is a coding mode corresponding to a second time-frequency domain resource subset in the at least one time-frequency domain resource subset. The second determination unit 320 may also be configured to transmit the first data by using the coding mode corresponding to the second time-frequency domain resource subset at the first time-frequency domain position.

In some embodiments, the ninth mapping relationship is determined by the communication device from multiple mapping relationships.

In some embodiments, the ninth mapping relationship is determined from the multiple mapping relationships based on relevant information of a terminal device, and/or the ninth mapping relationship is determined from the multiple mapping relationships based on information indicated by a network device.

In some embodiments, two adjacent time-frequency domain resource subsets in the first time-frequency domain resource set are continuous, or there is an interval between the two time-frequency domain resource subsets, or the two time-frequency domain resource subsets have an overlapping resource.

In some embodiments, different time-frequency domain resource subsets in the first time-frequency domain resource set include different numbers of resource units, or part or all of time-frequency domain resource subsets in the first time-frequency domain resource set include a same number of resource units.

In some embodiments, a length of the first time-frequency domain resource set in time domain is an integral multiple of a time unit, and/or a width of the first time-frequency domain resource set in frequency domain is an integral multiple of a frequency domain resource unit.

In some embodiments, different time-frequency domain resource subsets in the first time-frequency domain resource set correspond to different coding modes and/or different code unit lengths, or part of time-frequency domain resource subsets in the first time-frequency domain resource set correspond to a same coding mode and/or a same code unit length.

In some embodiments, the at least one time-frequency domain resource subset includes at least one of: a time-frequency domain resource subset included in the first time-frequency domain position, or a time-frequency domain resource subset partially overlapped with the first time-frequency domain position.

It should be understood that the apparatus embodiment and the method embodiment may correspond to each other, and for similar description, reference may be made to the method embodiment. Specifically, the communication device 300 illustrated in FIG. 22 may correspond to a corresponding entity for performing the method 200 of the embodiments of the present disclosure, and the foregoing operation and/or function and another operation and/or function of each unit in the communication device 300 are used to implement the corresponding procedure in respective method provided in the embodiments of the present disclosure, which is not repeated here for brevity.

The communication device according to the embodiments of the present disclosure is described above from the perspective of functional modules in combination with the drawings. It should be understood that the functional modules may be implemented in the form of hardware, or in the form of software instructions, or in a combination of hardware and software modules. Specifically, the operations of the methods disclosed in combination the embodiments of the disclosure may be directly embodied to be executed and completed by a hardware decoding processor or executed and completed by a combination of hardware and software modules in the decoding processor. In an example, the software module may be located in a mature storage medium in the art, such as a Random Access Memory (RAM), a flash memory, a Read-Only Memory (ROM), a Programmable ROM (PROM), an Electrically EPROM (EEPROM) or a register. The storage medium is located in the memory. The processor reads information from the memory and completes the operations of the foregoing methods in combination with the hardware of the processor.

For example, the first determination unit 310 and/or the second determination unit 320 mentioned above may be implemented by a processor.

FIG. 23 is a schematic structural diagram of a communication device 400 according to an embodiment of the present disclosure.

As illustrated in FIG. 23, the communication device 400 may include a processor 410.

The processor 410 may call and execute a computer program from a memory to implement the methods in the embodiments of the present disclosure.

As illustrated in FIG. 23, the communication device 400 may further include a memory 420.

The memory 420 may be used for storing indication information and may also be used for storing codes, instructions and the like executed by the processor 410. The processor 410 may call and execute a computer program from the memory 420 to implement the methods in the embodiments of the present disclosure. The memory 420 may be a separate device independent of the processor 410, or may be integrated within the processor 410.

As illustrated in FIG. 23, the communication device 400 may further include a transceiver 430.

The processor 410 may control the transceiver 430 to communicate with other devices, specifically, to transmit information or data to another device, or receive information or data from another device. The transceiver 33 may include a transmitter and a receiver. The transceiver 33 may further include one or more antennas.

It should be understood that the various components in the communication device 400 are connected by a bus system. In addition to a data bus, the bus system further includes a power bus, a control bus, and a status signal bus.

It should also be understood that the communication device 400 may implement the corresponding procedures implemented by the communication device in respective method of the embodiments of the present disclosure, that is, the communication device 400 of the embodiments of the present disclosure may correspond to the communication device 300 in the embodiments of the present disclosure and may correspond to the corresponding entity for performing the method 200 according to the embodiments of the present disclosure, which is not repeated here for brevity.

In addition, the embodiments of the present disclosure further provide a chip.

For example, the chip may be an integrated circuit chip having signal processing capabilities and implement or perform the methods, operations and logic diagrams disclosed in the embodiments of the present disclosure. The chip may also be referred to as a system-level chip, a system chip, a chip system or a chip-on system chip, etc. In an embodiment, the chip may be applicable to various communication devices, to enable the communication device installed with the chip to perform the methods, operations, and logic block diagrams disclosed in the embodiments of the present disclosure.

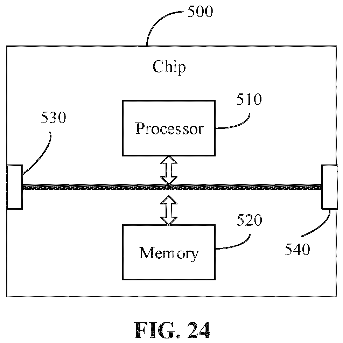

FIG. 24 is a schematic structural diagram of a chip 500 according to an embodiment of the present disclosure.

As illustrated in FIG. 24, the chip 500 includes a processor 510.

The processor 510 may call and execute a computer program from a memory to implement the method in the embodiments of the present disclosure.

As illustrated in FIG. 24, the chip 500 may further include a memory 520.

The processor 510 may call and execute a computer program from the memory 520 to implement the method in the embodiments of the present disclosure. The memory 520 may be used to store indication information and may also be used to store codes, instructions and the like executed by the processor 510. The memory 520 may be a separate device independent of the processor 510, or may be integrated within the processor 510.

As illustrated in FIG. 24, the chip 500 may further include an input interface 530.

The processor 510 may control the input interface 530 to communicate with other devices or chips, in particular to obtain information or data sent by other devices or chips.

As illustrated in FIG. 24, the chip 500 may further include an output interface 540.

The processor 510 may control the output interface 540 to communicate with other devices or chips, in particular to output information or data to other devices or chips.

It should be understood that the chip 500 may be applicable to the communication device in the embodiments of the present disclosure, and the chip may implement the corresponding flows implemented by the communication device in each method of the embodiments of the present disclosure, that is, may implement the corresponding procedures implemented by the terminal device or the network device in respective method of the embodiments of the present disclosure, which will not be elaborated herein for brief description.

It should also be understood that various components in the chip 500 are connected by a bus system. In addition to a data bus, the bus system further includes a power bus, a control bus, and a status signal bus.

The processor mentioned above may include, but is not limited to a universal processor, a Digital Signal Processor (DSP), an Application Specific Integrated Circuit (ASIC), a Field Programmable Gate Array (FPGA) or another programmable logic device, a discrete gate or transistor logic device, and a discrete hardware component, ect.

Each method, operation, and logical block diagram disclosed in the embodiments of the disclosure may be implemented or executed by the processor. The operations of the method disclosed in combination with the embodiments of the disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM), and a register. The storage medium is in a memory. The processor reads information in the memory and completes the operations of the method in combination with hardware of the processor.

The memory mentioned above includes, but is not limited to a volatile memory and/or a nonvolatile memory.

The nonvolatile memory may be an ROM, a Programmable ROM (PROM), an Erasable PROM (EPROM), an Electrically Erasable EPROM (EEPROM), or a flash memory. The volatile memory may be an RAM and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM).

It is to be noted that the memory described in the disclosure is intended to include memories of these and any other proper types.

The embodiments of the present disclosure further provide a computer-readable storage medium for storing one or more computer programs. The computer-readable storage medium stores one or more programs including instructions that, when executed by a portable electronic device including multiple application programs, cause the portable electronic device to perform the method for data transmission provided by the present disclosure. In an embodiment, the computer-readable storage medium may be applicable to the communication device in the embodiments of the present disclosure, and the computer program causes the computer to execute the corresponding procedures implemented by the communication device in each method of the embodiments of the present disclosure, which will not be elaborated herein for brief description.

The embodiments of the present disclosure further provide a computer program product, which includes a computer program. In an embodiment, the computer program product may be applicable to the communication device in the embodiments of the present disclosure, and the computer program causes a computer to execute the corresponding procedures implemented by the communication device in each method of the embodiments of the present disclosure, which will not be elaborated herein for brief description.

The embodiments of the present disclosure further provide a computer program. The computer program, when executed by a computer, causes the computer to perform the method for data transmission provided by the present disclosure. In an embodiment, the computer program may be applicable to the communication device in the embodiments of the present disclosure, and the computer program, when run on the computer, causes the computer to perform the corresponding procedures implemented by the communication device in each method of the embodiments of the present disclosure, which will not be elaborated herein for brief description.

The embodiments of the present disclosure further provide a communication system. The communication system may include the above-described terminal device and network device to form the communication system 100 as illustrated in FIG. 1, which will not be repeated here for brevity. It should be noted that the term "system" in the present disclosure can also be referred to as "network management architecture" or "network system".

It should also be understood that the terms used in the embodiments of the present disclosure and the appended claims are for the purpose of describing specific embodiments only and are not intended to limit the embodiments of the present disclosure. For example, as used in the embodiments of the present disclosure and the appended claims, the singular forms "a", "said" and "the" are intended to include the plural forms as well, unless the context clearly indicates otherwise.

Those skilled in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure. When being realized in form of software functional unit and sold or used as an independent product, the function may be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the operations of the method in each embodiment of the disclosure. The abovementioned storage medium includes: various media capable of storing program codes such as a U disk, a mobile hard disk, a ROM, a RAM, a magnetic disk or an optical disk.

Those skilled in the art may clearly learn about that specific working processes of the system, apparatus and unit described above may refer to the corresponding processes in the method embodiments and will not be elaborated herein for convenient and brief description. In some embodiments provided by the disclosure, it is to be understood that the disclosed system, apparatus and method may be implemented in another manner. For example, division of the units or modules or components in the apparatus embodiment described above is only logic function division, and other division manners may be adopted during practical implementation. For example, multiple units or modules or components may be combined or integrated into another system, or some units or modules or components may be neglected or not executed. For another example, the units or modules or components described as separate/displayed parts may or may not be physically separated, and namely may be located in the same place, or may also be distributed to multiple network units. Part or all of the units or modules or components may be selected to achieve the purpose of the embodiments according to a practical requirement. Finally, it is to be noted that coupling or direct coupling or communication connection between each displayed or discussed component may be indirect coupling or communication connection, implemented through some interfaces, of the apparatus or the units, and may be electrical and mechanical or adopt other forms.

The above is only the specific implementation of the embodiments of the disclosure and not intended to limit the scope of protection of the embodiments of the disclosure. Any variations or replacements apparent to those skilled in the art within the technical scope disclosed by the embodiments of the disclosure shall fall within the scope of protection of the embodiments of the disclosure. Therefore, the scope of protection of the embodiments of the disclosure shall be subject to the scope of protection of the claims.

## Claims

1. A method for data transmission, applicable to a communication device, the method comprising:
determining a first time-frequency domain resource used for first data; and
determining, based on the first time-frequency domain resource, at least one code unit length used for the first data and/or at least one coding mode used for the first data.

2. The method of claim 1, wherein determining, based on the first time-frequency domain resource, the at least one code unit length used for the first data and/or the at least one coding mode used for the first data comprises:
determining a first length of the first time-frequency domain resource in time domain;
determining a first length group to which the first length belongs; and
determining, based on a first mapping relationship, at least one code unit length corresponding to the first length group as the at least one code unit length, and/or at least one coding mode corresponding to the first length group as the at least one coding mode,
wherein the first mapping relationship comprises a correspondence between each length group in at least one length group and at least one code unit length and/or at least one coding mode corresponding to the length group, and the at least one length group comprises the first length group.

3. The method of claim 2, wherein the at least one length group comprises a group obtained by dividing time domain resources of a preset length, or the at least one length group comprises a group obtained by dividing at least one time domain resource length.

4. The method of claim 3, wherein each of the at least one time domain resource length is an integral multiple of a time unit, wherein determining the first length group to which the first length belongs comprises:
when the first length is not an integral multiple of the time unit, rounding down or up the first length to obtain a second length; and
determining a group to which the second length belongs as the first length group.

5. The method of any one of claims 2 to 4, wherein different length groups in the at least one length group correspond to different coding modes and/or different code unit lengths, or part of the at least one length group correspond to a same coding mode and/or a same code unit length.

6. The method of any one of claims 2 to 5, wherein the first mapping relationship is determined by the communication device from a plurality of mapping relationships.

7. The method of claim 6, wherein the first mapping relationship is determined from the plurality of mapping relationships based on relevant information of a terminal device, and/or the first mapping relationship is determined from the plurality of mapping relationships based on information indicated by a network device.

8. The method of claim 1, wherein determining, based on the first time-frequency domain resource, the at least one code unit length used for the first data and/or the at least one coding mode used for the first data comprises:
determining a first time-domain position of the first time-frequency domain resource in time domain; and
determining, based on at least one time domain resource subset corresponding to the first time-domain position, the at least one code unit length and/or the at least one coding mode.

9. The method of claim 8, wherein determining, based on the at least one time domain resource subset corresponding to the first time-domain position, the at least one code unit length and/or the at least one coding mode comprises:
determining at least one code unit length corresponding to the at least one time domain resource subset based on a second mapping relationship,
wherein the at least one code unit length is determined according to the at least one code unit length corresponding to the at least one time domain resource subset, and the second mapping relationship comprises a correspondence between each time domain resource subset in a first time domain resource set and at least one code unit length corresponding to the time domain resource subset, and the first time domain resource set comprises the at least one time domain resource subset.

10. The method of claim 9, wherein the at least one code unit length is the at least one code unit length corresponding to the at least one time domain resource subset, and the method further comprises at least one of:
transmitting the first data by using a code unit length corresponding to a first time domain resource subset in the at least one time domain resource subset at a position in the first time-domain position that partially or completely overlaps with the first time domain resource subset; or
transmitting the first data by using a preset code unit length at a position in the first time-domain position that does not overlap with the at least one time domain resource subset.

11. The method of claim 9, wherein the at least one code unit length is a code unit length corresponding to a second time domain resource subset in the at least one time domain resource subset, and the method further comprises:
transmitting the first data by using the code unit length corresponding to the second time domain resource subset at the first time-domain position.

12. The method of claim 9, wherein the second mapping relationship is determined by the communication device from a plurality of mapping relationships.

13. The method of claim 12, wherein the second mapping relationship is determined from the plurality of mapping relationships based on relevant information of a terminal device, and/or the second mapping relationship is determined from the plurality of mapping relationships based on information indicated by a network device.

14. The method of claim 8, wherein determining, based on the at least one time domain resource subset corresponding to the first time-domain position, the at least one code unit length, and/or the at least one coding mode comprises:
determining at least one coding mode corresponding to the at least one time domain resource subset based on a third mapping relationship,
wherein the at least one coding mode is determined according to the at least one coding mode corresponding to the at least one time domain resource subset, and the third mapping relationship comprises a correspondence between each time domain resource subset in a first time domain resource set and at least one coding mode corresponding to the time domain resource subset, and the first time domain resource set comprises the at least one time domain resource subset.

15. The method of claim 14, wherein the at least one coding mode is the at least one coding mode corresponding to the at least one time domain resource subset, and the method further comprises at least one of:
transmitting the first data by using a coding mode corresponding to a first time domain resource subset in the at least one time domain resource subset at a position in the first time-domain position that partially or completely overlaps with the first time domain resource subset; or
transmitting the first data by using a preset coding mode at a position in the first time-domain position that does not overlap with the at least one time domain resource subset.

16. The method of claim 14, wherein the at least one coding mode is a coding mode corresponding to a second time domain resource subset in the at least one time domain resource subset, and the method further comprises:
transmitting the first data by using the coding mode corresponding to the second time domain resource subset at the first time-domain position.

17. The method of any one of claims 14 to 16, wherein the third mapping relationship is determined by the communication device from a plurality of mapping relationships.

18. The method of claim 17, wherein the third mapping relationship is determined from the plurality of mapping relationships based on relevant information of a terminal device, and/or the third mapping relationship is determined from the plurality of mapping relationships based on information indicated by a network device.

19. The method of any one of claims 9 to 18, wherein two adjacent time domain resource subsets in the first time domain resource set are continuous, or there is an interval between the two time domain resource subsets, or the two time domain resource subsets have an overlapping resource.

20. The method of any one of claims 9 to 19, wherein different time domain resource subsets in the first time domain resource set have different time domain lengths, or part or all of time domain resource subsets in the first time domain resource set have a same time domain length.

21. The method of any one of claims 9 to 20, wherein a time domain length of the first time domain resource set is an integral multiple of a time unit.

22. The method of any one of claims 9 to 21, wherein different time domain resource subsets in the first time domain resource set correspond to different coding modes and/or different code unit lengths, or part of time domain resource subsets in the first time domain resource set correspond to a same coding mode and/or a same code unit length.

23. The method of any one of claims 8 to 22, wherein the at least one time domain resource subset comprises at least one of:
a time domain resource subset comprised in the first time-domain position; or
a time domain resource subset partially overlapped with the first time-domain position.

24. The method of claim 1, wherein determining, based on the first time-frequency domain resource, the at least one code unit length used for the first data and/or the at least one coding mode used for the first data comprises:
determining a first width of the first time-frequency domain resource in frequency domain;
determining a first width group to which the first width belongs; and
determining, based on a fourth mapping relationship, at least one first code unit length corresponding to the first width group as the at least one code unit length and/or at least one first coding mode corresponding to the first width group as the at least one coding mode,
wherein the fourth mapping relationship comprises a correspondence between each width group in at least one width group and at least one code unit length and/or at least one coding mode corresponding to the width group, and the at least one width group comprises the first width group.

25. The method of claim 24, wherein the at least one width group comprises a group obtained by dividing a frequency domain resource of a preset width, or the at least one width group comprises a group obtained by dividing at least one frequency domain resource width.

26. The method of claim 25, wherein each of the at least one frequency domain resource width is an integral multiple of a frequency domain resource unit, wherein determining the first width group to which the first width belongs comprises:
when the first width is not an integral multiple of the frequency domain resource unit, rounding up or down the first width to obtain a second width; and
determining a group to which the second width belongs as the first width group.

27. The method of any one of claims 24 to 26, wherein different width groups in the at least one width group correspond to different coding modes and/or different code unit lengths, or part of the at least one width group correspond to a same coding mode and/or a same code unit length.

28. The method of any one of claims 24 to 27, wherein the fourth mapping relationship is determined by the communication device from a plurality of mapping relationships.

29. The method of claim 28, wherein the fourth mapping relationship is determined from the plurality of mapping relationships based on relevant information of a terminal device, and/or the fourth mapping relationship is determined from the plurality of mapping relationships based on information indicated by a network device.

30. The method of claim 1, wherein determining, based on the first time-frequency domain resource, the at least one code unit length used for the first data and/or the at least one coding mode used for the first data comprises:
determining a first frequency-domain position of the first time-frequency domain resource in frequency domain; and
determining the at least one code unit length and/or the at least one coding mode based on at least one frequency domain resource subset corresponding to the first frequency-domain position.

31. The method of claim 30, wherein determining the at least one code unit length and/or the at least one coding mode based on the at least one frequency domain resource subset corresponding to the first frequency-domain position comprises:
determining at least one code unit length corresponding to the at least one frequency domain resource subset based on a fifth mapping relationship,
wherein the at least one code unit length is determined according to the at least one code unit length corresponding to the at least one frequency domain resource subset, and the fifth mapping relationship comprises a correspondence between each frequency domain resource subset in a first frequency domain resource set and at least one code unit length corresponding to the frequency domain resource subset, and the first frequency domain resource set comprises the at least one frequency domain resource subset.

32. The method of claim 31, wherein the at least one code unit length is the at least one code unit length corresponding to the at least one frequency domain resource subset, and the method further comprises at least one of:
transmitting the first data by using a code unit length corresponding to a first frequency domain resource subset in the at least one frequency domain resource subset at a position in the first frequency-domain position that partially or completely overlaps with the first frequency domain resource subset; or
transmitting the first data by using a preset code unit length at a position in the first frequency-domain position that does not overlap with the at least one frequency domain resource subset.

33. The method of claim 31, wherein the at least one code unit length is a code unit length corresponding to a second frequency domain resource subset in the at least one frequency domain resource subset, and the method further comprises:
transmitting the first data by using the code unit length corresponding to the second frequency domain resource subset at the first frequency-domain position.

34. The method of any one of claims 31 to 33, wherein the fifth mapping relationship is determined by the communication device from a plurality of mapping relationships.

35. The method of claim 34, wherein the fifth mapping relationship is determined from the plurality of mapping relationships based on relevant information of a terminal device, and/or the fifth mapping relationship is determined from the plurality of mapping relationships based on information indicated by a network device.

36. The method of claim 30, wherein determining the at least one code unit length and/or the at least one coding mode based on the at least one frequency domain resource subset corresponding to the first frequency-domain position comprises:
determining at least one coding mode corresponding to the at least one frequency domain resource subset based on the sixth mapping relationship,
wherein the at least one coding mode is determined according to the at least one coding mode corresponding to the at least one frequency domain resource subset, and the sixth mapping relationship comprises a correspondence between each frequency domain resource subset in a first frequency domain resource set and at least one coding mode corresponding to the frequency domain resource subset, and the first frequency domain resource set comprises the at least one frequency domain resource subset.

37. The method of claim 36, wherein the at least one coding mode is the at least one coding mode corresponding to the at least one frequency domain resource subset, and the method further comprises at least one of:
transmitting the first data by using a coding mode corresponding to a first frequency domain resource subset in the at least one frequency domain resource subset at a position in the first frequency-domain position that partially or completely overlaps with the first frequency domain resource subset; or
transmitting the first data by using a preset coding mode at a position in the first frequency-domain position that does not overlap with the at least one frequency domain resource subset.

38. The method of claim 36, wherein the at least one coding mode is a coding mode corresponding to a second frequency domain resource subset in the at least one frequency domain resource subset, and the method further comprises:
transmitting the first data by using the coding mode corresponding to the second frequency domain resource subset at the first frequency-domain position.

39. The method of any one of claims 36 to 38, wherein the sixth mapping relationship is determined by the communication device from a plurality of mapping relationships.

40. The method of claim 39, wherein the sixth mapping relationship is determined from the plurality of mapping relationships based on relevant information of a terminal device, and/or the sixth mapping relationship is determined from the plurality of mapping relationships based on information indicated by a network device.

41. The method of any one of claims 31 to 40, wherein two adjacent frequency domain resource subsets in the first frequency domain resource set are continuous, or there is an interval between the two frequency domain resource subsets, or the two frequency domain resource subsets have an overlapping resource.

42. The method of any one of claims 31 to 41, wherein different frequency domain resource subsets in the first frequency domain resource set have different frequency domain widths, or part or all of frequency domain resource subsets in the first frequency domain resource set have a same frequency domain width.

43. The method of any one of claims 31 to 42, wherein a frequency domain width of the first frequency domain resource set is an integral multiple of a frequency domain resource unit.

44. The method of any one of claims 31 to 43, wherein different frequency domain resource subsets in the first frequency domain resource set correspond to different coding modes and/or different code unit lengths, or part of frequency domain resource subsets in the first frequency domain resource set correspond to a same coding mode and/or a same code unit length.

45. The method of any one of claims 31 to 44, wherein the at least one frequency domain resource subset comprises at least one of:
a frequency domain resource subset comprised in the first frequency-domain position; or
a frequency domain resource subset partially overlapped with the first frequency-domain position.

46. The method of claim 1, wherein determining, based on the first time-frequency domain resource, the at least one code unit length used for the first data and/or the at least one coding mode used for the first data comprises:
determining a first number of resource units comprised in the first time-frequency domain resource;
determining a first quantity group to which the first number belongs; and
determining, based on a seventh mapping relationship, at least one code unit length corresponding to the first quantity group as the at least one code unit length and/or at least one coding mode corresponding to the first quantity group as the at least one coding mode,
wherein the seventh mapping relationship comprises a correspondence between each quantity group in at least one quantity group and at least one code unit length and/or at least one coding mode corresponding to the quantity group, and the at least one quantity group comprises the first quantity group.

47. The method of claim 46, wherein the at least one quantity group comprises a group obtained by dividing a preset number of resource units, or the at least one quantity group comprises a group obtained by dividing at least one resource unit number.

48. The method of claim 47, wherein each of the at least one resource unit number is an integral multiple of a resource unit, wherein determining the first quantity group to which the first number belongs comprises:
when the first number is not an integral multiple of the resource unit, rounding up or down the first number to obtain a second number; and
determining a group to which the second number belongs as the first quantity group.

49. The method of any one of claims 46 to 48, wherein different quantity groups in the at least one quantity group correspond to different coding modes and/or different code unit lengths, or part of the at least one quantity group correspond to a same coding mode and/or a same code unit length.

50. The method of any one of claims 46 to 49, wherein the seventh mapping relationship is determined by the communication device from a plurality of mapping relationships.

51. The method of claim 50, wherein the seventh mapping relationship is determined from the plurality of mapping relationships based on relevant information of a terminal device, and/or the seventh mapping relationship is determined from the plurality of mapping relationships based on information indicated by a network device.

52. The method of claim 1, wherein determining, based on the first time-frequency domain resource, the at least one code unit length used for the first data and/or the at least one coding mode used for the first data comprises:
determining a first time-frequency domain position of the first time-frequency domain resource; and
determining the at least one code unit length and/or the at least one coding mode based on at least one time-frequency domain resource subset corresponding to the first time-frequency domain position.

53. The method of claim 52, wherein determining the at least one code unit length and/or the at least one coding mode based on the at least one time-frequency domain resource subset corresponding to the first time-frequency domain position comprises:
determining at least one code unit length corresponding to the at least one time-frequency domain resource subset based on an eighth mapping relationship,
wherein the at least one code unit length is determined according to the at least one code unit length corresponding to the at least one time-frequency domain resource subset, and the eighth mapping relationship comprises a correspondence between each time-frequency domain resource subset in a first time-frequency domain resource set and at least one code unit length corresponding to the time-frequency domain resource subset, and the first time-frequency domain resource set comprises the at least one time-frequency domain resource subset.

54. The method of claim 53, wherein the at least one code unit length is the at least one code unit length corresponding to the at least one time-frequency domain resource subset, and the method further comprises at least one of:
transmitting the first data by using a code unit length corresponding to a first time-frequency domain resource subset in the at least one time-frequency domain resource subset at a position in the first time-frequency domain position that partially or completely overlaps with the first time-frequency domain resource subset; or
transmitting the first data by using a preset code unit length at a position in the first time-frequency domain position that does not overlap with the at least one time-frequency domain resource subset.

55. The method of claim 53, wherein the at least one code unit length is a code unit length corresponding to a second time-frequency domain resource subset in the at least one time-frequency domain resource subset, and the method further comprises:
transmitting the first data by using the code unit length corresponding to the second time-frequency domain resource subset at the first time-frequency domain position.

56. The method of any one of claims 53 to 55, wherein the eighth mapping relationship is determined by the communication device from a plurality of mapping relationships.

57. The method of claim 56, wherein the eighth mapping relationship is determined from the plurality of mapping relationships based on relevant information of a terminal device, and/or the eighth mapping relationship is determined from the plurality of mapping relationships based on information indicated by a network device.

58. The method of claim 52, wherein determining the at least one code unit length and/or the at least one coding mode based on the at least one time-frequency domain resource subset corresponding to the first time-frequency domain position comprises:
determining at least one coding mode corresponding to the at least one time-frequency domain resource subset based on a ninth mapping relationship,
wherein the at least one coding mode is determined according to the at least one coding mode corresponding to the at least one time-frequency domain resource subset, and the ninth mapping relationship comprises a correspondence between each time-frequency domain resource subset in a first time-frequency domain resource set and at least one coding mode corresponding to the time-frequency domain resource subset, and the first time-frequency domain resource set comprises the at least one time-frequency domain resource subset.

59. The method of claim 58, wherein the at least one coding mode is the at least one coding mode corresponding to the at least one time-frequency domain resource subset, and the method further comprises at least one of:
transmitting the first data by using a coding mode corresponding to a first time-frequency domain resource subset in the at least one time-frequency domain resource subset at a position in the first time-frequency domain position that partially or completely overlaps with the first time-frequency domain resource subset; or
transmitting the first data by using a preset coding mode at a position in the first time-frequency domain position that does not overlap with the at least one time-frequency domain resource subset.

60. The method of claim 58, wherein the at least one coding mode is a coding mode corresponding to a second time-frequency domain resource subset in the at least one time-frequency domain resource subset, and the method further comprises:
transmitting the first data by using the coding mode corresponding to the second time-frequency domain resource subset at the first time-frequency domain position.

61. The method of any one of claims 58 to 60, wherein the ninth mapping relationship is determined by the communication device from a plurality of mapping relationships.

62. The method of claim 61, wherein the ninth mapping relationship is determined from the plurality of mapping relationships based on relevant information of a terminal device, and/or the ninth mapping relationship is determined from the plurality of mapping relationships based on information indicated by a network device.

63. The method of any one of claims 53 to 62, wherein two adjacent time-frequency domain resource subsets in the first time-frequency domain resource set are continuous, or there is an interval between the two time-frequency domain resource subsets, or the two time-frequency domain resource subsets have an overlapping resource.

64. The method of any one of claims 53 to 63, wherein different time-frequency domain resource subsets in the first time-frequency domain resource set comprise different numbers of resource units, or part or all of time-frequency domain resource subsets in the first time-frequency domain resource set comprise a same number of resource units.

65. The method of any one of claims 53 to 64, wherein a length of the first time-frequency domain resource set in time domain is an integral multiple of a time unit, and/or a width of the first time-frequency domain resource set in frequency domain is an integral multiple of a frequency domain resource unit.

66. The method of any one of claims 53 to 65, wherein different time-frequency domain resource subsets in the first time-frequency domain resource set correspond to different coding modes and/or different code unit lengths, or part of time-frequency domain resource subsets in the first time-frequency domain resource set correspond to a same coding mode and/or a same code unit length.

67. The method of any one of claims 52 to 66, wherein the at least one time-frequency domain resource subset comprises at least one of:
a time-frequency domain resource subset comprised in the first time-frequency domain position; or
a time-frequency domain resource subset partially overlapped with the first time-frequency domain position.

68. The method of any one of claims 1 to 67, wherein the communication device is a terminal device or a network device.

69. A communication device, comprising:
a first determination unit, configured to determine a first time-frequency domain resource used for first data; and
a second determination unit, configured to determine, based on the first time-frequency domain resource, at least one code unit length used for the first data and/or at least one coding mode used by the first data.

70. A communication device, comprising: a processor and a memory for storing a computer program, wherein the processor is configured to call and execute the computer program stored in the memory to perform the method of any one of claims 1 to 67.

71. A chip, comprising:
a processor, configured to call and execute a computer program from a memory, to cause a device installed with the chip to perform the method of any one of claims 1 to 67.

72. A computer-readable storage medium for storing a computer program that causes a computer to perform the method of any one of claims 1 to 67.

73. A computer program product comprising computer program instructions that cause a computer to perform the method of any one of claims 1 to 67.

74. A computer program causing a computer to perform the method of any one of claims 1 to 26.
